# EUROPEAN PATENT APPLICATION

(11) **EP 4 783 318 A1**
(43) Date of publication of application: **29.07.2026**
(21) Application number: 26153283.2
(22) Date of filing: 21.01.2026
(51) Int. Cl.: H01M 50/184, H01M 50/193, H01M 50/46

(54) **BATTERY MEMBER, BATTERY MEMBER ASSEMBLY, METHOD AND APPARATUS FOR PRODUCING BATTERY MEMBER ASSEMBLY, BATTERY LAMINATE, AND POWER STORAGE DEVICE**

(30) Priority: 23.01.2025 JP 2025009702; 23.01.2025 JP 2025009706; 26.12.2025 JP 2025284611
(71) Applicant: Ricoh Company, Ltd., Tokyo 143-8555 (JP)
(72) Inventor: TAKAUJI, Keigo, Tokyo, 143-8555 (JP); OHKIMOTO, Miku, Tokyo, 143-8555 (JP)
(74) Representative: Marks & Clerk LLP

(57) **Abstract**

There is provided a battery member, which includes a porous structure (Y) at an outermost surface of the battery member, and an adhesive layer. The adhesive layer includes one or more adhesive portions (X) formed of an adhesive. Each of the one or more adhesive portions (X) includes an adhesive protrusion portion (Xa) that is disposed on the porous structure (Y), and an adhesive impregnation portion (Xb) that is disposed within the porous structure (Y) and extends onto a periphery of the adhesive protrusion portion (Xa).

## Description

### 1. Field of the Invention

The present disclosure relates to a battery member, a battery member assembly, a method and apparatus for producing the battery member assembly, a battery stack, and a power storage device.

### 2. Description of the Related Art

In recent years, a demand for power storage devices, such as batteries and the like, that can achieve high outputs and high capacities for in-vehicle applications has been rapidly increasing. Accordingly, it is predicted that a shape of a power storage device will become complicated in order to achieve an increase in size of the power storage device and a highly dense arrangement of the power storage device with respect to an installation space.

As a battery member for a power storage device, for example, a lithium-ion battery separator provided with an adhesive has been proposed from the viewpoint of inhibition of misalignment of the battery member (see, for example, Japanese Translation of PCT International Application Publication No. JP-T-2022-538604). The proposed separator provided with the adhesive includes a base film, and an adhesive layer that is disposed on the base film and has a specific thickness. As a component of the adhesive, for example, the adhesive including a hot-melt resin is also disclosed (see, for example, Japanese Unexamined Patent Application Publication Nos. 2004-259625 and 2017-050215).

### SUMMARY OF THE INVENTION

One aspect of the present disclosure aims to provide a battery member having excellent strength, and a production method that uses the battery member and can produce a battery member assembly having excellent strength.

According to one aspect of the present disclosure, a battery member includes: a porous structure at an outermost surface of the battery member; and an adhesive layer that includes one or more adhesive portions formed of an adhesive. Each of the one or more adhesive portions includes: an adhesive protrusion portion Xa that is disposed on the porous structure; and an adhesive impregnation portion Xb that is disposed within the porous structure and extends onto a periphery of the adhesive protrusion portion Xa.

According to one aspect of the present disclosure, there can be provided a battery member having excellent strength, and a production method that uses the battery member and can produce a battery member assembly having excellent strength.

### BRIEF DESCRIPTION OF THE DRAWINGS

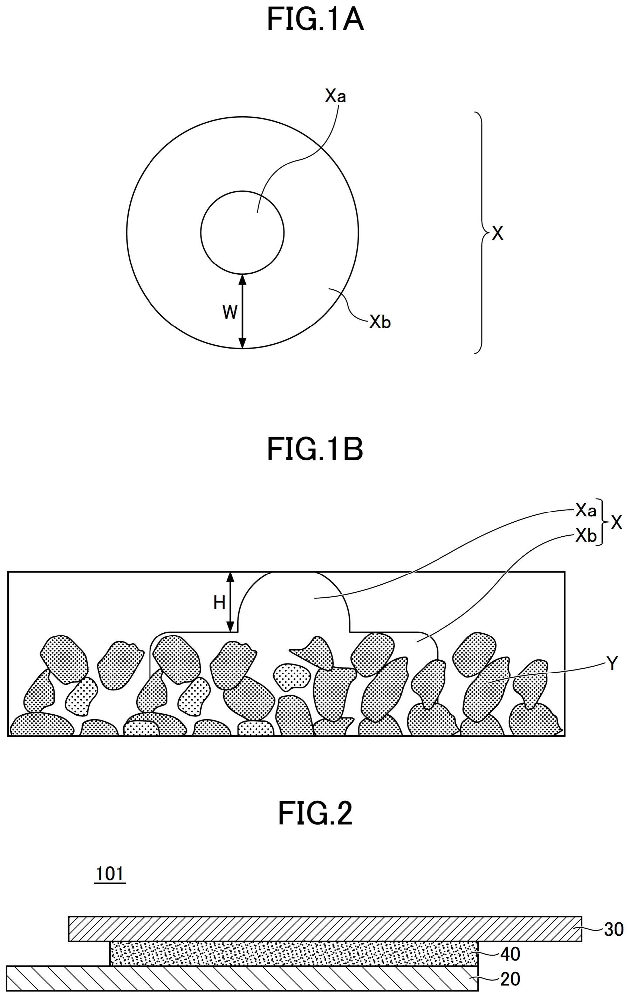

Fig. 1A is a schematic view illustrating an example of shapes of an adhesive protrusion portion Xa and an adhesive impregnation portion Xb when the battery member of the present embodiment is viewed in the vertical direction with respect to the plane on which the adhesive protrusion portion Xa is disposed; Fig. 1B is a schematic cross-sectional view illustrating the shapes of the adhesive protrusion portion Xa and the adhesive impregnation portion Xb, taken along the direction perpendicular to the direction of the plane of the battery member on which the adhesive protrusion portion Xa is disposed;
Fig. 2 is a schematic cross-sectional view (part 1) illustrating an example of a structure of a battery member assembly of the present embodiment;
Fig. 3 is a schematic cross-sectional view (part 2) illustrating an example of the structure of the battery member assembly of the present disclosure;
Fig. 4A is a schematic cross-sectional view (part 4) illustrating an example of the structure of the battery member assembly of the present disclosure;
Fig. 4B is a schematic cross-sectional view illustrating another example of the structure of the battery member assembly of Fig. 4A;
Fig. 5 is a schematic cross-sectional view (part 5) illustrating an example of the structure of the battery member assembly of the present disclosure;
Fig. 6A is a schematic top view for illustrating an example of adhesive portions X disposed on a negative electrode of the battery member assembly of the present disclosure;
Fig. 6B is a schematic top view for illustrating another example of the adhesive portions X disposed on the negative electrode of the battery member assembly of the present disclosure;
Fig. 7A is a schematic top view for illustrating an example of the adhesive portions X disposed on the negative electrode of the battery member assembly of the present disclosure; Fig. 7B is a schematic top view (part 1) for illustrating another example of the adhesive portions X disposed on the negative electrode of the battery member assembly of the present disclosure;
Fig. 7C is a schematic top view (part 2) for illustrating another example of the adhesive portions X disposed on the negative electrode of the battery member assembly of the present disclosure;
Fig. 7D is a schematic top view (part 3) for illustrating another example of the adhesive portions X disposed on the negative electrode of the battery member assembly of the present disclosure;
Fig. 8 is a schematic view illustrating an example of a structure of a battery member assembly stacking device;
Fig. 9A is a schematic cross-sectional view (part 6) illustrating an example of a structure of the battery member assembly of the present disclosure;
Fig. 9B is a schematic cross-sectional view (part 7) illustrating an example of the structure of the battery member assembly of the present disclosure;
Fig. 10 is a schematic view illustrating an example of a structure of an apparatus for producing the battery member assembly of the present disclosure;
Fig. 11 is a schematic view illustrating an example of a structure of an apparatus for producing a battery stack of the present embodiment;
Fig. 12 is a schematic view illustrating an example of folding processing performed by the apparatus for producing the battery stack of the present embodiment;
Fig. 13 is a schematic view for illustrating a structure of the battery member assembly in Examples;
Fig. 14 is a schematic view for illustrating a structure of the battery member assembly in Examples;
Fig. 15 is a schematic view for illustrating a structure of an evaluation element in Referential Examples;
Fig. 16 is a schematic cross-sectional view illustrating an example of a structure of a battery member assembly of the present embodiment;
Fig. 17 is a schematic cross-sectional view illustrating an example of the structure of the battery member assembly of the present embodiment;
Fig. 18 is a schematic cross-sectional view illustrating an example of the structure of the battery member assembly of the present embodiment; and
Fig. 19 is a schematic cross-sectional view illustrating an example of the structure of the battery member assembly of the present embodiment.

### DESCRIPTION OF THE EMBODIMENTS

The existing batteries have the following problem. Thermal runaway caused by a short-circuit between electrodes cannot be inhibited, leading to rupture or ignition. This is a phenomenon caused by misalignment of relative positions between battery members (e.g., a positive electrode, a negative electrode, a separator, and the like) occurring during production of batteries. It is expected that the above phenomenon is likely to occur more frequently with an increase in size and complexity of a device configuration. As a means for solving such a problem, a technique of inhibiting the misalignment of the battery members with a specific adhesive has been proposed as in Japanese Translation of PCT International Application Publication No. JP-T-2022-538604.

Each of a positive electrode, a negative electrode, and a separator, which are battery members, used in lithium-ion secondary batteries and the like, has a porous structure. Therefore, in order to effectively exhibit adhesion between the battery members having the porous structures, it is important that an adhesive is disposed at the upper surface portion of each porous structure. Therefore, the technology of providing an adhesive at the upper surface portion of the porous structure using a hot-melt resin, which exhibits fluidity at high temperatures and loses fluidity at low temperatures, has been proposed as in Japanese Unexamined Patent Application Publication Nos. 2004-259625 and 2017-050215.

However, the existing battery members including the technologies disclosed in Japanese Translation of PCT International Application Publication No. JP-T-2022-538604, and Japanese Unexamined Patent Application Publication Nos. 2004-259625 and 2017-050215 have a problem such that the porous structure is damaged mainly in a region where the adhesive is formed at the time of production of an electrode stack. The damage of the porous structure causes reduction in the capacity of the battery, or unevenness of a reaction, leading to low battery characteristics.

As described above, as the existing adhesive, a thermoplastic resin or an adhesive resin formed of a polymer having a low glass transition temperature is used. The existing adhesive is heated and softened when battery members are bonded to each other using the adhesive. Therefore, there are problems, such that, when the battery members are bonded, the positional deviation may occur due to softening of the adhesive, and battery characteristics may be impaired due to melting of the adhesive or the like.

In addition, the melting or softening of the adhesive is also likely to occur in a drying step performed during production of nonaqueous secondary batteries, and therefore the same problems occur.

The battery member of the present disclosure can sufficiently solve the various problems existing in the related art. More specifically, according to one aspect of the present disclosure, a battery member having excellent strength can be provided.

The method for producing the battery member assembly of the present disclosure can sufficiently solve the various problems existing in the related art. More specifically, according to one aspect of the present disclosure, there is provided a method for producing a battery member, which can produce a battery member assembly that has excellent adhesive strength and prevents misalignment between battery members.

Embodiments of the present disclosure will be specifically described hereinafter.
(Battery member) The battery member of the present disclosure includes a porous structure on an outermost surface, and an adhesive layer including one or more adhesive portions formed of an adhesive. Each of the one or more adhesive portions includes an adhesive protrusion portion Xa that is disposed on the porous structure, and an adhesive impregnation portion Xb that is disposed within the porous structure and extends onto the periphery of the adhesive protrusion portion Xa. The battery member of the present disclosure may further include other components, as necessary.

In the present specification, the term "battery member" refers to one of members for exhibiting a charging or discharging function of a battery, or one of members for aiding such a function. In addition, one of the members for aiding the charging or discharging function of the battery may be a casing in which an electrode stack is housed, or a chassis on which a battery is mounted, or the like.

A member used for the battery member is not particularly limited, and may be appropriately selected according to the intended purpose, as long as the member has a porous structure at the outermost surface of the member. Examples of the member include a current collector, a positive electrode including a positive electrode active material layer, a negative electrode including a negative electrode active material layer, a separator, a solid electrolyte layer, and the like. The member used for the battery member is not particularly limited as long as the member has the above functions of the battery member, and the member may be a conductive layer or an insulating layer.
<Current collector> The current collector is not particularly limited, and may be appropriately selected according to the intended purpose, as long as the current collector is flat and has conductivity. Examples of the current collector include aluminum foils, copper foils, stainless steel foils, titanium foils, etched foils in which fine holes are made by etching the foregoing foils, perforated electrode substrates used for lithium-ion capacitors, and the like. The above current collectors can be generally used for secondary batteries, capacitors, and the like, which are power storage devices. Among the power storage devices, the above current collector can be suitably used for a lithium-ion secondary battery.

In the case where the current collector is used for a power generation device, such as a fuel cell, a carbon paper fibrous electrode obtained by flattening non-woven or woven fibers, or among the perforated electrode substrates, a perforated electrode substrate having fine holes may be used. In the case where the current collector is used for a solar light device, a transparent semiconductor thin film of indium-titanium oxide, zinc oxide, or the like formed on a flat substrate, such as a glass, a plastic, or the like, or a conductive electrode film which is thinly deposited may be used.
<Positive electrode active material layer> The positive electrode active material layer is a layer including a positive electrode active material, and may further include a binder (binding agent), a conductive agent, a thickening agent, a dispersant, a nonaqueous electrolytic solution, a solid electrolyte, a gel electrolyte, a monomer that is transformed into a gel electrolyte through a polymerization process, and other components, as necessary.
-Positive electrode active material - The positive electrode active material is not particularly limited, and may be appropriately selected according to the intended purpose, as long as the positive electrode active material can reversibly occlude and release alkali metal ions. Examples of the positive electrode active material include alkali metal-containing transition metal compounds and the like. Examples of the alkali metal-containing transition metal compounds include lithium-containing transition metal compounds and the like.

Examples of the lithium-containing transition metal compounds include composite oxides including lithium and at least one selected from the group consisting of cobalt, manganese, nickel, chromium, iron, and vanadium. More specifically, examples of the lithium-containing transition metal compounds include: lithium-containing transition metal oxides, such as lithium cobaltate, lithium nickelate, and lithium manganate; olivine lithium salts, such as LiFePO₄; chalcogen compounds, such as titanium disulfide, and molybdenum disulfide; manganese dioxide; and the like.

The lithium-containing transition metal oxide is a metal oxide including lithium and a transition metal or a metal oxide in which a part of the transition metal of the metal oxide is substituted with a different element. Examples of the different element include Na, Mg, Sc, Y, Mn, Fe, Co, Ni, Cu, Zn, Al, Cr, Pb, Sb, B, and the like. Among the above different elements, Mn, Al, Co, Ni, and Mg are preferable. A single element from the above different elements may be included, or two or more elements from the above different elements may be included in combination.

In the case where a nickel-metal hydride battery is used as the power storage device, examples of the positive electrode active material include nickel hydroxide, and the like.

The above positive electrode active materials may be used alone or in combination.
-Binder- The binder is not particularly limited, and may be appropriately selected according to the intended purpose. Examples of the binder include polyvinylidene difluoride (PVDF), polytetrafluoroethylene (PTFE), polyethylene, polypropylene, aramid resins, polyamide, polyimide, polyamideimide, polyacrylonitrile, polyacrylic acid, poly(methyl acrylate), poly(ethyl acrylate), poly(hexyl acrylate), polymethacrylic acid, poly(methyl methacrylate), poly(ethyl methacrylate), poly(hexyl methacrylate), polyvinyl acetate, polyvinylpyrrolidone, polyether, polyethersulfone, hexafluoropolypropylene, styrene-butadiene rubber, carboxymethyl cellulose, and the like.

Further, as the binder, a copolymer using, as constituent substances, two or more monomers or polymers selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene may be used.

The above binders may be used alone or in combination of two or more.
-Conductive agent- The conductive agent is not particularly limited, and may be appropriately selected according to the intended purpose. Examples of the conductive agent include: graphite, such as natural graphite and artificial graphite; carbon blacks, such as acetylene black, Ketjen black, channel black, furnace black, lamp black, and thermal black; conductive fibers, such as carbon fibers, and metal fibers; metal powders, such as carbon fluoride, and aluminum; conductive whiskers, such as zinc oxide and potassium titanate; conductive metal oxides, such as titanium oxide; organic conductive materials, such as phenylene derivatives, and graphene derivatives; and the like.

The above conductive agents may be used to form a complex with the positive electrode active material.

The above conductive agents may be used alone or in combination of two or more.

The positive electrode active material layer may have one or more openings. The number of the openings is preferably one or more, and more preferably two or more.

Each opening may be extended through the positive electrode active material layer from one surface of the positive electrode active material layer to another surface adjacent to the surface of the current collector, or may not be extended to another surface adjacent to the surface of the current collector. Each opening may be a void, or may be filled with a material. In the case where each opening is filled with a material, one material, or a mixture of two or more materials may be used as the material. In either case, the material is preferably a different material from a material constituting the positive electrode active material layer. The material is preferably a material including a solid electrolyte, from the viewpoint of improvement in ion conductivity. The positive electrode active material layer having the one or more openings can be suitably produced by an inkjet device because application of the layer can be easily controlled.

An adhesive layer including a metal that can form an alloy with lithium may be disposed between the positive electrode active material layer and the current collector.

A method for producing the positive electrode active material layer is not particularly limited, and may be appropriately selected according to the intended purpose. For example, the positive electrode active material layer can be produced by dispersing a powdery active material or a catalyst composition in a liquid to form a dispersion liquid, applying the dispersion liquid onto the current collector, and solidifying and drying the dispersion liquid. For the application of the dispersion liquid, coating using a spray, a dispenser, or a die coater, dip coating, or the like is typically employed.
<Negative electrode active material layer> The negative electrode active material layer is a layer including a negative electrode active material, and may further include a binder (binding agent), a conductive agent, a thickening agent, a dispersant, a nonaqueous electrolytic solution, a solid electrolyte, a gel electrolyte, a monomer that is transformed into a gel electrolyte through a polymerization process, and other components, as necessary.
-Negative electrode active material- The negative electrode active material is not particularly limited, and may be appropriately selected according to the intended purpose, as long as the negative electrode active material can reversibly occlude and release alkali metal ions. Examples of the negative electrode active material include carbon materials including a graphite having a graphite crystal structure, and the like. More specifically, examples of the negative electrode active material include natural graphite, spherical or fibrous artificial graphite, non-graphitizing carbon (hard carbon), graphitizing carbon (soft carbon), and the like. As well as the above carbon materials, lithium titanate can also be used.

As the negative electrode active material, a high capacity material, such as silicon, tin, silicon alloy, silicon oxide, silicon nitride, tin oxide, or the like can also suitably be used from the viewpoint of increase in the energy density of a power storage device to be produced.

In the case where a nickel-metal hydride battery is used as the power storage device of the present embodiment, examples of the negative electrode active material include AB₂ or A₂B hydrogen storage alloys, such as Zr-Ti-Mn-Fe-Ag-V-Al-W, and Ti₁₅Zr₂₁V₁₅Ni₂₉Cr₅Co₅Fe₁Mn₈.

The above negative electrode active materials may be used alone or in combination of two or more.
-Binder- The binder is not particularly limited, and may be appropriately selected according to the intended purpose. Examples of the binder include polyvinylidene difluoride (PVDF), polytetrafluoroethylene (PTFE), polyethylene, polypropylene, aramid resins, polyamide, polyimide, polyamideimide, polyacrylonitrile, polyacrylic acid, poly(methyl acrylate), poly(ethyl acrylate), poly(hexyl acrylate), polymethacrylic acid, poly(methyl methacrylate), poly(ethyl methacrylate), poly(hexyl methacrylate), polyvinyl acetate, polyvinylpyrrolidone, polyether, polyethersulfone, hexafluoropolypropylene, styrene-butadiene rubber, carboxymethyl cellulose, and the like.

Further, as the binder, a copolymer using, as constituent substances, two or more monomers or polymers selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene may be used.

The above binders may be used alone or in combination of two or more.
-Conductive agent- The conductive agent is not particularly limited, and may be appropriately selected according to the intended purpose. Examples of the conductive agent include: graphite, such as natural graphite, and artificial graphite; carbon blacks, such as acetylene black, Ketjen black, channel black, furnace black, lamp black, and thermal black; conductive fibers, such as carbon fibers, and metal fibers; metal powders, such as carbon fluoride, and aluminum; conductive whiskers, such as zinc oxide, and potassium titanate; conductive metal oxides, such as titanium oxide; organic conductive materials, such as phenylene derivatives, and graphene derivatives; and the like. The above conductive agents may be used to form a complex with the negative electrode active material.

The above conductive agents may be used alone or in combination of two or more.

The negative electrode active material layer may have one or more openings. The number of the openings is preferably one or more, and more preferably two or more.

Each opening may be extended through the negative electrode active material layer from one surface of the negative electrode active material layer to another surface of the negative electrode active material adjacent to the surface of the current collector, or may not be extended to another surface adjacent to the surface of the current collector. Each opening may be a void, or may be filled with a material. In the case where each opening is filled with a material, one material, or a mixture of two or more materials may be used as the material. In either case, the material is preferably a different material from a material constituting the negative electrode active material layer. The material is preferably a material including a solid electrolyte, from the viewpoint of improvement in ion conductivity. The negative electrode active material layer having the one or more openings can be suitably produced by an inkjet device because application of the layer can be easily controlled.

An adhesive layer including a metal that can form an alloy with lithium may be disposed between the negative electrode active material layer and the current collector.

A method for producing the negative electrode active material layer is not particularly limited, and may be appropriately selected according to the intended purpose. For example, the negative electrode active material layer can be produced by dispersing a powdery active material or a catalyst composition in a liquid to form a dispersion liquid, applying the dispersion liquid onto the current collector, and solidifying and drying the dispersion liquid. For the application of the dispersion liquid, coating using a spray, a dispenser, or a die coater, dip coating, or the like is typically employed.
<Separator> The separator is disposed between the negative electrode and the positive electrode for inhibiting short-circuit between the negative electrode and the positive electrode. The separator preferably has ion permeability and preferably has insulation properties with no electron conductivity.

The material of the separator is not particularly limited, and may be appropriately selected according to the intended purpose. Examples of the material include: paper, such as kraft paper, vinylon mixed paper, and synthetic pulp mixed paper; cellophane; polyethylene graft membranes; polyolefin nonwoven fabrics, such as polypropylene melt-flow nonwoven fabrics; polyamide nonwoven fabrics; glass fiber nonwoven fabrics; polyethylene-based porous membranes; polypropylene-based porous membranes; and the like. Among the above materials, a material having porosity of 50% or greater is preferable from the viewpoint of retention of an electrolyte.

As the separator, a material obtained by mixing ceramic particles, such as alumina and zirconia, with a binder or a solvent may be used. When the above material is used, the average particle size of the ceramic particles is preferably set to the range of about 0.2 µm to about 3.0 µm for imparting lithium ion permeability to the separator.

The average thickness of the separator is not particularly limited, and may be appropriately selected according to the intended purpose. The average thickness of the separator is preferably 3 µm or greater and 50 µm or less, and more preferably 5 µm or greater and 30 µm or less.

The separator may be a separator provided with an adhesive layer including a hot-melt resin, such as polyvinylidene fluoride (PVDF). The surface of the separator on which an adhesive forming liquid composition is applied or an adhesive is formed for producing the battery member of the present embodiment may be the area where the adhesive layer of the hot-melt resin is present or the area where the adhesive layer of the hot-melt resin is not present, but is preferably the area where the adhesive layer of the hot-melt resin is not present. Since the adhesive of the present embodiment is formed on the area where the adhesive layer of the hot-melt resin is not present, a battery member assembly that inhibits misalignment between battery members while maintaining a bonding function due to the hot-melt resin can be produced. In addition, the adhesive of the adhesive layer provided to the separator and the adhesive of the present embodiment do not overlap to form a two-layer structure so that a distance between a positive electrode and a negative electrode can be kept small, contributing improvement in battery characteristics.

Further, the separator may be a separator including ceramic particles and an adhesive layer including a hot-melt resin. Owing to the above configuration of the separator, in addition to the effects obtained by the present disclosure, effects, such as inhibition of misalignment during stacking of battery members, improvement in thermal resistance of a battery stack, improvement in acid resistance in a high potential environment, and the like can be obtained.

Since the ceramic particles impart hardness to the separator, a stack obtained after bonding becomes stronger, which makes transportation of the stack easy, thereby improving productivity.

The structure of the separator is not particularly limited, and may be appropriately selected according to the intended purpose. The separator may have a single-layer structure or a laminate structure.

The size of the separator is not particularly limited, and may be appropriately selected according to the intended purpose, as long as the separator is in the size that can be used for a power storage device or the like.

The battery member of the present disclosure will be described with reference to drawings hereinafter. In the drawings, the same constituent components are denoted by the same reference numerals, and redundant description may be omitted.
[Figs. 1A to 1B] Fig. 1A is a schematic view illustrating an example of shapes of the adhesive protrusion portion Xa and the adhesive impregnation portion Xb when the battery member of the present embodiment is viewed in the vertical direction with respect to the plane on which the adhesive protrusion portion Xa is disposed. In Fig. 1A, the battery member is omitted. Fig. 1B is a schematic cross-sectional view illustrating an example of the shapes of the adhesive protrusion portion Xa and the adhesive impregnation portion Xb, which is taken along the direction perpendicular to the direction of the plane of the battery member on which the adhesive protrusion portion Xa is disposed.

As illustrated in Figs. 1A and 1B, the battery member of the present embodiment includes a porous structure Y, an adhesive protrusion portion Xa formed of an adhesive disposed on the porous structure Y, and an adhesive impregnation portion Xb that is formed of the adhesive, is disposed within the porous structure Y, and extends onto the periphery of the adhesive protrusion portion Xa. In the present specification, the adhesive protrusion portion Xa and the adhesive impregnation portion Xb are collectively referred to as an "adhesive portion X". Specifically, one adhesive portion X includes the adhesive protrusion portion Xa and the adhesive impregnation portion Xb. In addition, in the present specification, the "adhesive layer" includes one or more "adhesive portions X".

Although the detailed description will be given later, the mechanism for forming the adhesive portion X is as follows. When the adhesive forming liquid composition is applied to the battery member having the porous structure, part of the adhesive forming liquid composition permeates through the porous structure. At the point when the porous structure is impregnated with the adhesive forming liquid composition to a certain degree, energy is applied to the adhesive forming liquid composition to allow the adhesive forming liquid composition to be polymerized and cured, thereby forming an adhesive to form an adhesive layer. During the curing, as the portion of the adhesive forming liquid composition remaining on the battery member without permeating through the porous structure is cured by polymerization, an adhesive protrusion portion Xa having adhesiveness is formed. In addition, as the portion of the adhesive forming liquid composition permeating through the porous structure is cured by polymerization, an adhesive impregnation portion Xb that does not have adhesiveness is formed.
<Adhesive protrusion portion Xa> As illustrated in Fig. 1B, the adhesive protrusion portion Xa refers to a portion of the adhesive present on the porous structure Y. The adhesive protrusion portion Xa has a function of bonding the battery member of the present embodiment to another battery member or another member. The adhesive protrusion portion Xa is a portion having adhesiveness.

The height H of each adhesive protrusion portion Xa is preferably 1 µm or greater, and more preferably 3 µm or greater in view of improvement in adhesive strength. As illustrated in Fig. 1B, the height H of the adhesive protrusion portion Xa is the maximum height with reference to the plane on which the adhesive protrusion portion Xa is disposed.

The area of the region in which all of one or more adhesive protrusion portions Xa is disposed is preferably 10,000 µm² or greater, and more preferably 50,000 µm² or greater in view of improvement in bonding strength.

The coverage of the entire surface of the battery member with all of the one or more adhesive protrusion portions Xa is not particularly limited, and may be appropriately selected according to the intended purpose. In view of improvement in bonding strength, the coverage is preferably 0.1% or greater.

A method for measuring the height H, area, and coverage for the adhesive protrusion portion Xa is not particularly limited, and may be appropriately selected according to the intended purpose. For example, the measurement can be performed using a digital microscope (device name: VHX-7000, manufactured by KEYENCE CORPORATION) or the like.

The shape of the adhesive protrusion portion Xa is not particularly limited, and may be appropriately selected according to the intended purpose. For example, the adhesive protrusion portion Xa may have a circular shape or a substantially circular shape as illustrated in Fig. 1A, or may have a rectangular shape or a substantially rectangular shape.
<Adhesive impregnation portion Xb> As illustrated in Figs. 1A and 1B, the adhesive impregnation portion Xb refers to a portion of the adhesive that is present within the porous structure Y and extends onto the periphery of the adhesive protrusion portion Xa. The adhesive impregnation portion Xb has a function of improving the strength of the battery member and is a portion having no adhesiveness. Specifically, in the adhesive impregnation portion Xb, the porous structure Y is impregnated with the adhesive, which contributes to reduction in local damage of the porous structure during bonding, and as a result, the strength of the battery is improved.

The width W of the adhesive impregnation portion Xb when the battery member is viewed in the vertical direction with respect to the plane on which the adhesive protrusion portion Xa is disposed is not particularly limited, and may be appropriately selected according to the intended purpose. In view of an effect of improving strength of the battery member, the width W is preferably 0.01 mm or greater, and more preferably 0.05 mm or greater. When there are a plurality of values of the width W, among the values, the minimum value of the width W excluding 0 is determined as the width W.

A method for measuring the width W of the adhesive impregnation portion Xb is not particularly limited, and may be appropriately selected according to the intended purpose. For example, the measurement can be performed using a digital microscope (device name: VHX-7000, manufactured by KEYENCE CORPORATION) or the like.

A method for determining whether the porous structure of the battery member is impregnated with the adhesive is not particularly limited, and may be appropriately selected according to the intended purpose. Examples of the determination method include: a method in which the presence of the adhesive is determined by a change in chromaticity with respect to the surface of the battery member under an optical microscope; a method for determining a material distribution by a scanning electron microscope (SEM) or by energy dispersive X-ray spectroscopy (EDX), and the like.

The shape of the adhesive impregnation portion Xb is not particularly limited, and may be appropriately selected according to the shape of adhesive protrusion portion Xa.
<Adhesive> The adhesive is formed by irradiating the adhesive forming liquid composition with light.

The adhesive is not particularly limited, and may be appropriately selected according to the intended purpose, as long as the adhesive has a function of adhering a battery member or the like. The adhesive may be an organic compound or an inorganic compound. Among such adhesives, a resin material is preferably used because the resin material develops fluidity by an external temperature, a molecular weight control, mixing with a diluent, or the like, and achieves excellent processability at the time of application. By using the resin material, materials exhibiting various temperature characteristics, such as a glass transition temperature or melting point, can be prepared by selecting materials for use, molecular weight control, or the like.
<<Adhesive forming liquid composition>> The adhesive forming liquid composition is a liquid material having fluidity. Examples of the method for obtaining fluidity include: a method using a thermoplastic resin; a method using a polymerizable functional group-containing polymerizable compound; and the like. Among the above methods, a polymerizable functional group-containing polymerizable compound, which induces a polymerization reaction by external energy, such as light, heat, or the like, is preferably used in view of appropriate control in formation of the above-described adhesive protrusion portion Xa and adhesive impregnation portion Xb because polymerization can be performed at any timing after applying the adhesive forming liquid composition onto the battery member or another member, such as a release liner or the like.

The adhesive forming liquid composition preferably includes one or more polymerizable compounds as a main component, and may further include a solvent, a polymerization initiator, and a leveling agent, as necessary. In the present specification, the term "main component" means that such a component is included in an amount of 50 percent by mass or greater relative to the total amount of the adhesive forming liquid composition.
-Polymerizable compound- The polymerizable compound is preferably a compound that is polymerized to form a resin. The resin is preferably a resin formed by applying active energy rays (e.g., light irradiation, application of heat, and the like). Specifically, examples of the resin include acrylic resins, methacrylic resins, urethane acrylic resins, vinyl ester resins, unsaturated polyester resins, epoxy resins, oxetane resins, vinyl ether resins, resins formed by thiol-ene reactions, and the like.

From the viewpoint of productivity, the polymerizable compound preferably includes an acrylic group, a methacrylic group, or a vinyl group. In the present specification, an acryloyl group or methacryloyl group may be referred to as a "(meth)acryloyl group".

The resin formed using the polymerizable compound including an acrylic group or methacrylic group is preferably an acrylic resin, a methacrylic resin, or a urethane acrylic resin from the viewpoint of productivity.

The resin formed using the polymerizable compound including a vinyl group is preferably a vinyl ester resin from the viewpoint of productivity.

The above polymerizable compounds may be used alone or in combination of two or more. In the case where two or more polymerizable compounds are used in combination, the combination of the polymerizable compounds is not particularly limited, and may be appropriately selected according to the intended purpose. For example, a urethane acrylic resin serving as a main component is preferably mixed with another resin from the viewpoint of imparting flexibility to a resultant adhesive.

The polymerizable compound preferably includes a radical polymerizable compound having a radically polymerizable functional group from the viewpoint of imparting high reactivity and facilitating formation of a resin.

The radical polymerizable compound is not particularly limited, and may be appropriately selected according to the intended purpose. Examples of the radical polymerizable compound include monofunctional radical polymerizable compounds, bifunctional radical polymerizable compounds, trifunctional or higher radical polymerizable compounds, functional monomers, radical polymerizable oligomers, and the like. Among the above radical polymerizable compounds, a monofunctional radical polymerizable compound is preferable because a resin having a low glass transition temperature or melting point can be easily designed.

The bifunctional or higher polymerizable compound can increase the polymerization rate of the adhesive. Thus, after applying the adhesive forming liquid composition to the battery member having the porous structure and polymerizing the adhesive forming liquid composition, decrease in adhesiveness over time, such as excessive penetration of the adhesive into the porous structure, can be minimized.

Examples of the monofunctional radical polymerizable compound include 2-(2-ethoxyethoxy)ethyl acrylate, methoxy poly(ethylene glycol) monoacrylate, methoxy poly(ethylene glycol) monomethacrylate, phenoxy poly(ethylene glycol) acrylate, 2-acryloyloxyethyl succinate, methoxy di(propylene glycol) acrylate, 2-ethylhexyl acrylate, 2-hydroxyethyl acrylate, phenoxyethyl acrylate, phenoxy di(ethylene glycol) acrylate, 2-hydroxypropyl acrylate, tetrahydrofurfuryl acrylate, 2-ethylhexylcarbitol acrylate, lauryl acrylate, 3-methoxybutyl acrylate, benzyl acrylate, ethoxy di(ethylene glycol) acrylate, phenoxy poly(ethylene glycol) acrylate, cyclohexyl acrylate, 2-hydroxy-3-phenoxypropylacrylate, isoamyl acrylate, isobutyl acrylate, methoxy tri(ethylene glycol) acrylate, stearyl acrylate, 2-ethylhexyl-diglycol acrylate, phenoxy tetra(ethylene glycol) acrylate, isobornyl acrylate, cetyl acrylate, isostearyl acrylate, stearyl acrylate, styrene monomers, and the like. The above monofunctional radical polymerizable compounds may be used alone or in combination of two or more.

Examples of the bifunctional radical polymerizable compound include 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, neopentyl glycol diacrylate, tricyclodecane dimethanol diacrylate, and the like. The above bifunctional radical polymerizable compounds may be used alone or in combination of two or more.

Examples of the trifunctional or higher radical polymerizable compound include trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloxyethyl)isocyanurate, dipentaerythritol hexaacrylate (DPHA), caprolactone-modified dipentaerythritol hexaacrylate, dipentaerythritol hydroxy pentaacrylate, alkyl-modified dipentaerythritol pentaacrylate, alkyl-modified dipentaerythritol tetraacrylate, alkyl-modified dipentaerythritol triacrylate, dimethylol propane tetraacrylate (DTMPTA), pentaerythritol ethoxy tetraacrylate, EO-modified phosphoric acid triacrylate, 2,2,5,5-tetrahydroxymethylcyclopenane tetraacrylate, and the like. The above trifunctional or higher radical polymerizable compounds may be used alone or in combination of two or more.

The amount of the one or more polymerizable compounds is not particularly limited, and may be appropriately selected according to the intended purpose. The amount of the one or more polymerizable compounds is preferably 50.0 percent by mass or greater, more preferably 80.0 percent by mass or greater, and yet more preferably 90.0 percent by mass or greater, relative to the total amount of the adhesive forming liquid composition. When the amount of the one or more polymerizable compounds is 90.0 percent by mass or greater relative to the total amount of the adhesive forming liquid composition, the concentration of the resin in the adhesive obtained after polymerization increases, the adhesive has high strength, and therefore a function of adhering battery members to each other is easily obtained.

The amount of the monofunctional polymerizable compound is not particularly limited, and may be appropriately selected according to the intended purpose. The amount of the monofunctional polymerizable compound is preferably 50 percent by mass or greater, more preferably 90 percent by mass or greater, and yet more preferably 99 percent by mass or greater, relative to a total mass of precursors of the resin.

Since the amount of the monofunctional polymerizable compound is increased, it becomes easy to design a resin having a low glass transition temperature or a melting point, and a battery member assembly having excellent adhesion and battery characteristics can be formed.

The amount of the bifunctional or higher polymerizable compound can be appropriately adjusted in accordance with solvent resistance or voltage resistant characteristics which are important for the adhesive inside a battery. The amount of the bifunctional or higher polymerizable compound is preferably 50.0 percent by mass or less, more preferably 20.0 percent by mass or less, and more preferably 8.0 percent by mass or less relative to a total mass of precursors of the resin. When the amount of the bifunctional or higher polymerizable compound is 50.0 percent by mass or less, the adhesive obtained after polymerization can have an appropriate degree of crosslink density and sufficient flexibility, and ion permeability can be suitably maintained in an electrolytic solution.

The glass transition temperature or melting point of the monofunctional polymerizable compound is not particularly limited, and may be appropriately selected according to the intended purpose. The glass transition temperature or melting point of the monofunctional polymerizable compound is preferably -80°C or higher and 50°C or lower, and more preferably -30°C or higher and 30°C or lower.

When the glass transition temperature or melting point of the monofunctional polymerizable compound is 50°C or lower, the shape of the resin can conform to a surface of a battery member, to which the battery member is bonded, without externally applying high energy to the adhesive portion X, and the battery member can be securely bonded to another battery member or the like. Particularly in the case where the glass transition temperature or melting point of the monofunctional polymerizable compound is equal to or lower than the ambient temperature, the battery member can be securely bonded to another battery member or the like only by bringing the battery members to be into contact with each other without externally applying energy, and therefore bonding efficiency of the battery members is significantly improved, which is preferable.

When the glass transition temperature or melting point of the monofunctional polymerizable compound is 50°C or lower, the adhesive impregnation portion Xb is swollen by an electrolytic solution when the battery member is used to form a cell, and therefore the adhesive is unlikely to adversely affect ion permeability at the time when the battery cell is driven. In addition, if swelling is caused by the electrolytic solution when the battery member is used to form a cell, the hardness of the adhesive of the adhesive impregnation portion Xb is reduced, and therefore the adhesive is appropriately deformed at the time of production of the cell so that the battery members can be brought closer to each other. Favorable battery characteristics can be ensured by the above effects.

When the glass transition temperature or melting point of the monofunctional polymerizable compound is excessively low, fracture strength of the adhesive is reduced, and sufficient adhesive strength may not be obtained. Therefore, the glass transition temperature or melting point of the monofunctional polymerizable compound is preferably -80°C or higher, and more preferably -30°C or higher.

A method for measuring the glass transition temperature or melting point of the polymerizable compound included in the adhesive forming liquid composition is not particularly limited, and may be appropriately selected according to the intended purpose. For example, the glass transition temperature or melting point of the polymerizable compound can be measured by differential thermal analysis.

The polymerizable compound preferably undergoes an anaerobic polymerization for allowing the polymerization to proceed at a high rate so that the polymerization is carried out at an appropriate timing to form a pressure-sensitive adhesive.
-Solvent- The solvent is a liquid compatible with the polymerizable compound.

Since the solvent is included in the adhesive forming liquid composition, fluidity of the adhesive forming liquid composition is improved, and the adhesive forming liquid composition can be adjusted to have fluid physical properties (e.g., viscosity, surface tension, and the like) which allow formation of the adhesive protrusion portion Xa and the adhesive impregnation portion Xb to be easily controlled. In the case where the adhesive forming liquid composition is discharged by inkjet printing, in addition to consideration for the formation of the adhesive, the adhesive forming liquid composition is desired to have discharge stability. Since a wide range of materials can be used in combination with the solvent, the adhesive forming liquid composition can be easily designed.

The solvent is not particularly limited, and may be appropriately selected according to the intended purpose. Examples of the solvent include: ethylene glycols, such as diethylene glycol monomethyl ether, ethylene glycol monobutyl ether, ethylene glycol monoisopropyl ether, dipropylene glycol monomethyl ether, and the like; esters, such as γ-butyrolactone and propylene carbonate; amides, such as NN-dimethylacetamide; and the like. Moreover, a solvent having a relatively large molecular weight, such as methyl tetradecanoate, methyl decanoate, methyl myristate, tetradecane, or the like may be used, or acetone, 2-ethylhexanol, 1-bromonaphthalate, or the like can be also used. The above solvents may be used alone or in combination of two or more.

In the case where the solvent is used alone or two or more solvents are used in combination, the boiling point of the solvent or the mixture of the solvents is not particularly limited, and may be appropriately selected according to the intended purpose. The boiling point at ambient pressure is preferably 50°C or higher and 250°C or lower, more preferably 70°C or higher and 200°C or lower, and yet more preferably 120°C or greater and 190°C or lower.

When the boiling point of the solvent is 50°C or higher, vaporization of the solvent at around room temperature is inhibited so that it is easy to handle the adhesive forming liquid composition and control the amount of the solvent in the adhesive forming liquid composition.

When the boiling point of the solvent is 250°C or less, the duration of a drying process of the solvent after the polymerization is shortened, thereby improving the productivity of the adhesive.

The adhesive forming liquid composition preferably includes a porogen having the above-described specific relationship with the polymerizable compound. The porogen is preferably a liquid solvent that can dissolve constituent components of the adhesive forming liquid composition, particularly, the one or more polymerizable compounds, and allows the one or more polymerizable compounds to undergo phase separation as the polymerization proceeds.

The amount of the solvent is not particularly limited, and may be appropriately selected according to the intended purpose. The amount of the solvent is preferably 10.0 percent by mass or less, more preferably 5.0 percent by mass or less, and yet more preferably 1.0 percent by mass or less, relative to a total amount of the adhesive forming liquid composition. When the amount of the solvent is 10.0 percent by mass relative to the total amount of the adhesive forming liquid composition, the resin density of the adhesive obtained after the polymerization becomes high, which increases strength of the adhesive, and therefore a sufficient adhesion function of bonding battery members to each other is obtained.

-Polymerization initiator- The polymerization initiator is a material capable of generating active species, such as radicals, cations, or the like, by energy, such as light, heat, or the like, and initiating polymerization of the polymerizable compound.

The polymerization initiator is not particularly limited, and may be appropriately selected according to the intended purpose. Examples of the polymerization initiator include radical polymerization initiators known in the art, cationic polymerization initiators, base generators, and the like. Among the above polymerization initiators, a photoradical polymerization initiator is preferable. The above polymerization initiators can be used alone or in combination of two or more.

As the photoradical polymerization initiator, a photoradical generator can be used. Specific examples of the photoradical generator include benzophenone, α-hydroxy-amino acetophenone, α-aminoacetophenone, 4-aroyl-1,3-dioxolane, benzyl ketal, 2,2-diethoxyacetophenone, p-dimethylaminoacetophenone, p-dimethylaminopropiophenone, benzophenone, 2-chlorobenzophenone, pp'-dichlorobenzophene, pp'-bisdiethylaminobenzophenone, Michler's ketone, benzil, benzoin, benzil dimethyl ketal, tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexylphenylketone, 2-hydroxy-2-methyl-1-phenyl-1-one, 1-(4-isopropylphenyl)-2-hydroxy-2-methylpropan-1-one, methylbenzoyl formate, benzoin isopropyl ether, benzoin methyl ether, benzoin ethyl ether, benzoin ether, benzoin isobutyl ether, benzoin-butyl ether, benzoin-propyl, 1-hydroxy-cyclohexyl-phenyl-ketone, 2-benzyl-2-dimethylamino-1-(4-morpholinophenyl)-butanone-1, 1-hydroxy-cyclohexyl-phenyl-ketone, 2,2-dimethoxy-1,2-diphenylethan-1-one, bis(η5-2,4-cyclopentadien-1-yl)-bis(2,6-difluoro-3-(1H-pyrrol-1-yl)-phenyl) titanium, bis(2,4,6-trimethylbenzoyl)-phenylphosphine oxide, 2-methyl-1[4-(methylthio)phenyl]-2-morpholinopropan-1-one, 2-hydroxy-2-methyl-1-phenyl-propan-1-one (product name: Darocur 1173), bis(2,6-dimethoxybenzoyl)-2,4,4-trimethyl-pentylphosphin oxide, 1-[4-(2-hydroxyethoxy)-phenyl]-2-hydroxy-2-methyl-1-propan-1-one monoacylphosphine oxide, bisacylphosphine oxide or titanocene, fluorescein, anthraquinone, thioxanthone, xanthone, lophine dimers, trihalomethyl compounds, dihalomethyl compounds, active ester compounds, organoboron compounds, and the like.

The adhesive forming liquid composition may also include a photo-crosslinking radical generator, such as a bisazide compound or the like.

In the case where the polymerizable compound is polymerized by applying only heat, a thermal polymerization initiator serving as a radical generator, such as azobisisobutyronitrile (AIBN) or the like, can be used.

The amount of the polymerization initiator is not particularly limited, and may be appropriately selected according to the intended purpose. In view of a sufficient curing rate, the amount of the polymerization initiator is preferably 0.05 percent by mass or greater and 10.0 percent by mass or less, and more preferably 0.5 percent by mass or greater and 5.0 percent by mass or less, when the total mass of the polymerizable compound is 100.0 percent by mass.
-Physical properties of adhesive forming liquid composition- The viscosity of the adhesive forming liquid composition is not particularly limited, and may be appropriately selected according to the intended purpose. The viscosity of the adhesive forming liquid composition is preferably 1,000.0 mPa·s or less, more preferably 100 mPa·s or less, and yet more preferably 20.0 mPa·s or less. The lower the viscosity of the adhesive forming liquid composition, the easier it is for the adhesive forming liquid composition applied onto a battery member to permeate through the porous structure of the battery member. Thus, the low viscosity of the adhesive forming liquid composition is preferable.

In the case where the adhesive forming liquid composition is used for inkjet printing, the viscosity of the adhesive forming liquid composition is preferably 1.0 mPa·s or greater and 20.0 mPa·s or less in view of favorable dischargeability.

A method for measuring the viscosity of the adhesive forming liquid composition is not particularly limited, and may be appropriately selected according to the intended purpose. For example, the viscosity of the adhesive forming liquid composition can be measured by a viscometer (device name: RE-550L, manufactured by Toki Sangyo Co., Ltd.) or the like.

The surface tension of the adhesive forming liquid composition is not particularly limited, and may be appropriately selected according to the intended purpose. The surface tension of the adhesive forming liquid composition is preferably 5 mN/m or greater and 80 mN/m or less, and more preferably 20 mN/m or greater and 50 mN/m or less. When the surface tension of the adhesive forming liquid composition is within the above range, it is preferable because it is easy for the adhesive forming liquid composition applied onto a battery member to permeate through the porous structure of the battery member.

The surface tension of the adhesive forming liquid composition may be preferably 25 mN/m or greater, and more preferably 35 mN/m or greater. When the surface tension of the adhesive forming liquid composition is 25 mN/m or greater, a change caused over time, such as an excessive amount of the adhesive forming liquid composition penetrating the porous structure, or the like, can be inhibited.

In the case where the adhesive forming liquid composition is temporarily applied to a member, such as a release liner or the like, followed by being transferred to the battery member, the droplets of the adhesive forming liquid composition have substantially spherical shapes and have a small contact area with the member due to high surface tension of the adhesive forming liquid composition, and therefore the applied adhesive forming liquid composition is easily transferred.

In the case where the adhesive forming liquid composition is used for inkjet printing, the surface tension of the adhesive forming liquid composition is preferably 25 mN/m or greater and 45 mN/m or less from the viewpoint of favorable dischargeability.

As the method for applying the adhesive forming liquid composition, inkjet printing is preferably employed. Since the adhesive forming liquid composition is discharged as spherical ink droplets by inkjet printing, a sufficient function as the adhesive can be exhibited with a small amount of the ink.

A method for measuring the surface tension of the adhesive forming liquid composition is not particularly limited, and may be appropriately selected according to the intended purpose. For example, the surface tension of the adhesive forming liquid composition can be measured by an automatic tensiometer (device name: DY-300, manufactured by Kyowa Interface Science Co., Ltd.).
<<Adhesive>> The adhesive may include a functional group that reacts with the functional group present at the surface of the battery member. After bonding the battery members, the chemical bond is formed between the adhesive and the functional group present at the surface of the battery member, and therefore, the battery members or the like can be securely bonded to each other.

The adhesive may be used as an insulating layer in a battery. In the case where the adhesive is functioned as the insulating layer, an organic filler, such as alumina, zirconia, silica, or the like is preferably added as a filler to the adhesive forming liquid composition from the viewpoint of high thermal resistance and high strength, which are important for the adhesive in order to function in a high temperature environment.

The porosity of the resin in the adhesive is not particularly limited, and may be appropriately selected according to the intended purpose. Since high adhesive strength is obtained as the contact area of the adhesive with a battery member is larger, the porosity of the resin in the adhesive is preferably 50% or less, more preferably 10% or less, and yet more preferably 1% or less. For the same reason, the pore diameter of the resin in the adhesive is preferably 100 nm or less, more preferably 10 nm or less, and yet more preferably 5 nm or less.

A method for measuring the porosity and pore diameter of the resin in the adhesive is not particularly limited, and may be appropriately selected according to the intended purpose. For example, the porosity and pore diameter can be measured by SEM image analysis, a mercury porosimeter, or the like.

The degree of polymerization of the adhesive may be further increased by a vacuum step or a heating step from the viewpoint of reduction in the low-molecular components. The adhesive strength is increased by reducing the amount of the low-molecular components.

According to one aspect of the present disclosure, sufficient flexibility can be imparted to the adhesive by designing the resin. Therefore, even if the adhesive is compressed when the battery members are bonded together, the adhesive appropriately deforms so that the compression does not affect the distance between the electrodes, thereby minimizing reduction in battery characteristics. Accordingly, by using the battery member of the present disclosure, significant effects, such as improvement in dimensional stability and reliability, can be exhibited.

In addition, the adhesive for use in one aspect of the present disclosure is also advantageous in transfer coating. Specifically, an excessive degree of penetration of the adhesive forming liquid composition into the porous structure of the battery member, such as an electrode, is unlikely to occur, favorable ion permeability can be ensured, and as a result, input/output characteristics and cycle characteristics of a battery can be improved. Since the adhesive forming liquid composition does not form a continuous film on a surface of an an electrode active material, the adhesive forming liquid composition does not interfere a designed capacity, contributing to a high capacity of a battery.

High potential resistance can be imparted to the adhesive by introducing, for example, an aromatic ring into the polymerizable compound included in the adhesive forming liquid composition. Therefore, the battery member has excellent durability in a high potential battery, such as a lithium-ion battery or the like.
(Battery member assembly) The battery member assembly of the present embodiment is a battery member assembly, in which a first battery member and a second battery member are bonded together via an adhesive protrusion portion Xa formed of an adhesive. The first battery member has a porous structure at an outermost surface of the first battery member. The battery member assembly includes the adhesive protrusion portion Xa on the porous structure, and an adhesive impregnation portion Xb, which is formed of the adhesive, and is disposed within the porous structure and extends onto the periphery of the adhesive protrusion portion Xa. The battery member assembly of the present embodiment may further include other members, as necessary. Since the first battery member corresponds to the battery member of the present embodiment, the description duplicated with the description in the above section of (Battery member) will be omitted.

Since the battery member assembly of the present embodiment has excellent strength due to the above battery member, a change in relative positions between the battery members or the like during or after stacking the battery members or the like can be inhibited, and therefore safety of the battery is improved. In addition, the number of members used during stacking to produce a battery is reduced, and therefore the efficiency during stacking can be significantly improved.

The second battery member is not particularly limited, and may be appropriately selected according to the intended purpose. Examples of the second battery member include a current collector, a positive electrode including a positive electrode active material layer, a negative electrode including a negative electrode active material layer, a separator, a solid electrolyte layer, any combination of the foregoing, and the like.

The battery member assembly of the present embodiment will be described with reference to drawings hereinafter. In the drawings, the same components are denoted by the same reference numerals, and redundant description may be omitted.

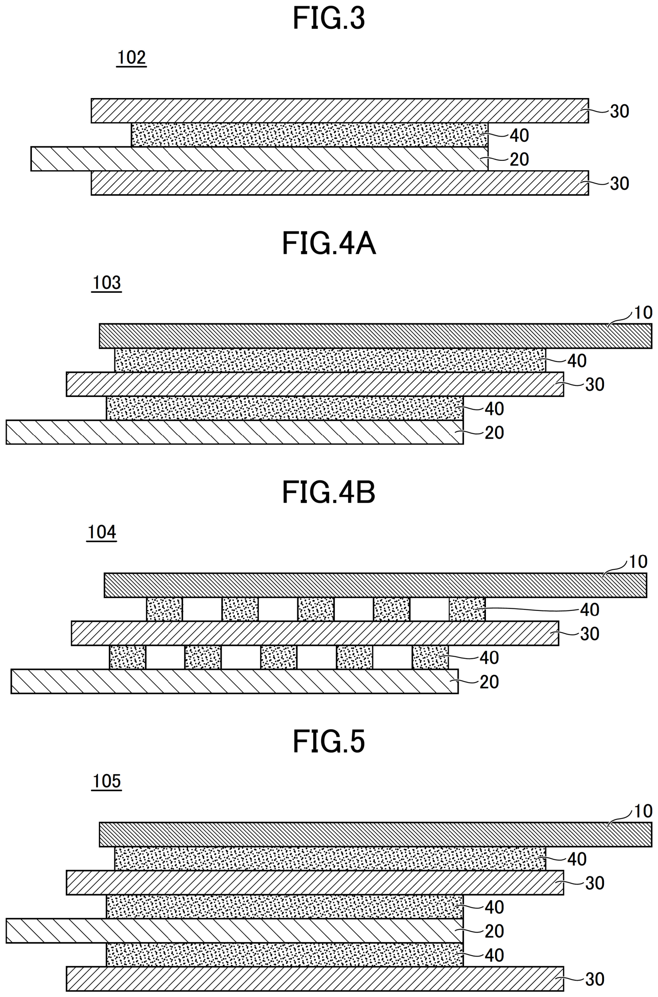

[Figs. 2 to 3] Fig. 2 is a schematic cross-sectional view (part 1) illustrating an example of a structure of the battery member assembly of the present embodiment. Fig. 3 is a schematic cross-sectional view (part 2) illustrating an example of the structure of the battery member assembly of the present embodiment. In the sequential drawings, the specific structure of the adhesive portion X will be omitted.

The battery member assembly 101 of Fig. 2 has a structure in which a negative electrode 20 and a separator 30 are bonded by an adhesive 40. The battery member assembly 102 of Fig. 3 has a structure in which a stack of a separator 30 and a negative electrode 20 and a separator 30 are bonded by an adhesive 40.

In recent years, thicknesses of separators have been reduced to achieve high ion permeability. Since the thin separator has low strength, problems, such as deformation or breakage, are likely to occur during high-speed winding or stacking. By binding the separator to the negative electrode having high strength in advance, the above problems can be avoided, leading to improvement in handling of the separators.
[Figs. 4A to 5] Fig. 4A is a schematic cross-sectional view (part 4) illustrating an example of the structure of the battery member assembly of the present embodiment. Fig. 4B is a schematic cross-sectional view illustrating another example of the structure of the battery member assembly of Fig. 4A. Fig. 5 is a schematic cross-sectional view (part 5) illustrating an example of the structure of the battery member assembly of the present embodiment.

Each of the battery member assembly 103 of Fig. 4A and the battery member assembly 104 of Fig. 4B has the structure in which a positive electrode 10, a separator 30, and a negative electrode 20 are bonded together by an adhesive 40. The battery member assembly 105 of Fig. 5 has the structure in which a separator 30, a negative electrode 20, a separator 30, and a positive electrode 20 are bonded together in this order by an adhesive 40.

A region of the battery member to which the adhesive 40 is applied, i.e., a region of the battery member in which one or more adhesive portions X are formed, is not particularly limited, and may be appropriately selected according to the intended purpose. As illustrated in Fig. 4A, the adhesive 40 may be applied to the entire surface of the porous structure of the battery member. Alternatively, as illustrated in Fig. 4B, the adhesive 40 may be applied at least a part of the porous structure of the battery member.

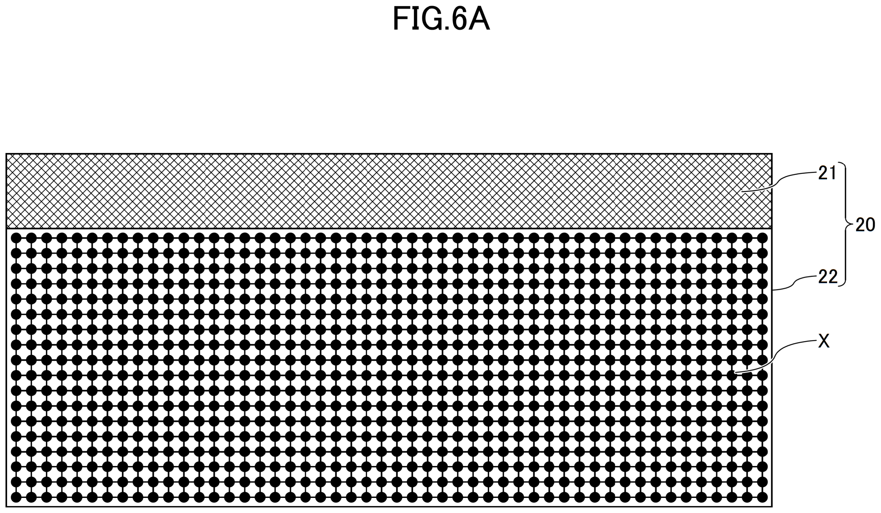

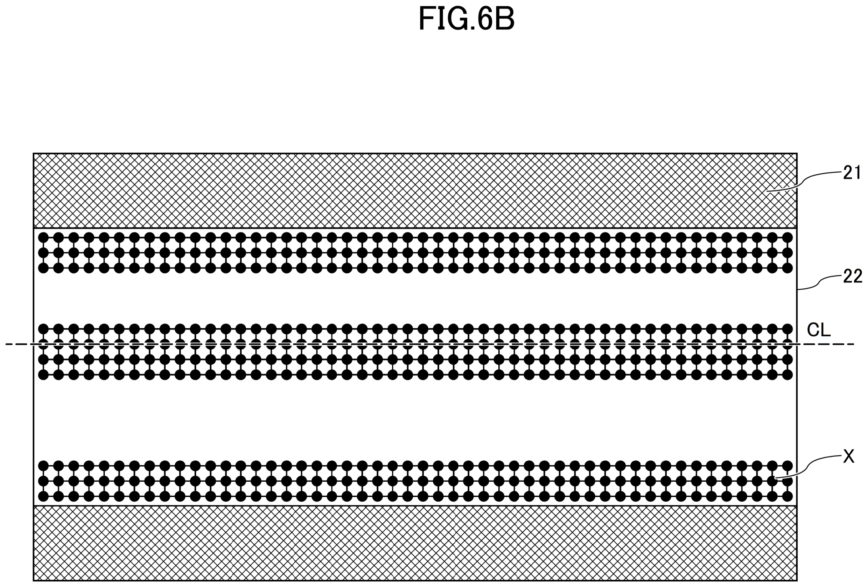

[Figs. 6A to 6B] Fig. 6A is a schematic top view for illustrating an example of the adhesive portions X provided on the negative electrode 20 in the battery member assembly of the present embodiment. Fig. 6B is a schematic top view for illustrating another example of the adhesive portions X provided on the negative electrode 20 in the battery member assembly of the present embodiment.

In Figs. 6A and 6B, as the negative electrode 20, a structure in which a negative electrode material mixture layer 22 is disposed on a current collector 21 is illustrated.

The adhesive portions X are preferably disposed discontinuously on the porous structure in the battery member. As illustrated in Fig. 6A, the adhesive portions X are more preferably disposed as dots. Ion permeability inside a battery may be reduced depending on a type or bonding state of an adhesive for use. By disposing the adhesive portions X discontinuously on the porous structure in the battery member, regions where no adhesive is present are created, thereby sufficiently securing ion permeability inside a battery.

In the case where the battery member assembly is cut into a predetermined size, the adhesive portions X are preferably disposed in the vicinity of the cutting site. By arranging the adhesive portions X in the above-described manner, even if the cutting site is slightly shifted, it is more likely for the adhesive portions X to be present at the edge of the cut battery member assembly so that inclusion of foreign matter into the battery from outside can be inhibited, minimizing a problem, such as short-circuit, or the like. In Fig. 6B, the cutting site is illustrated as a cut line CL.

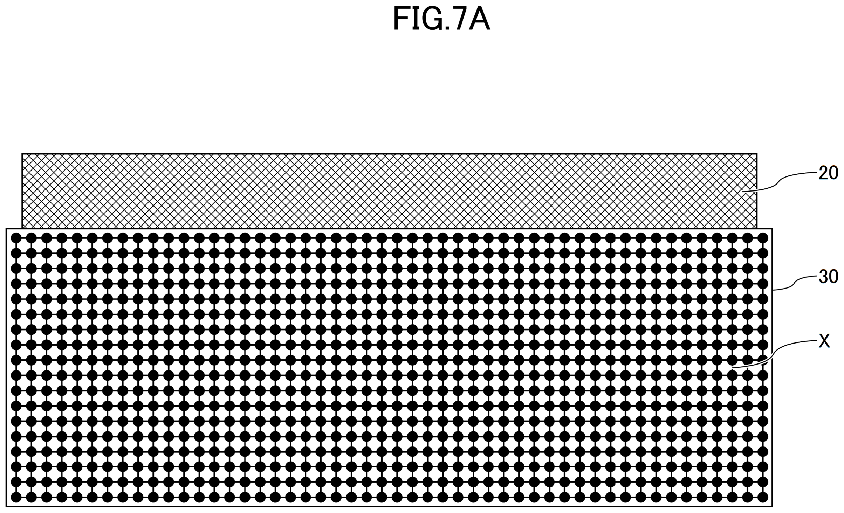

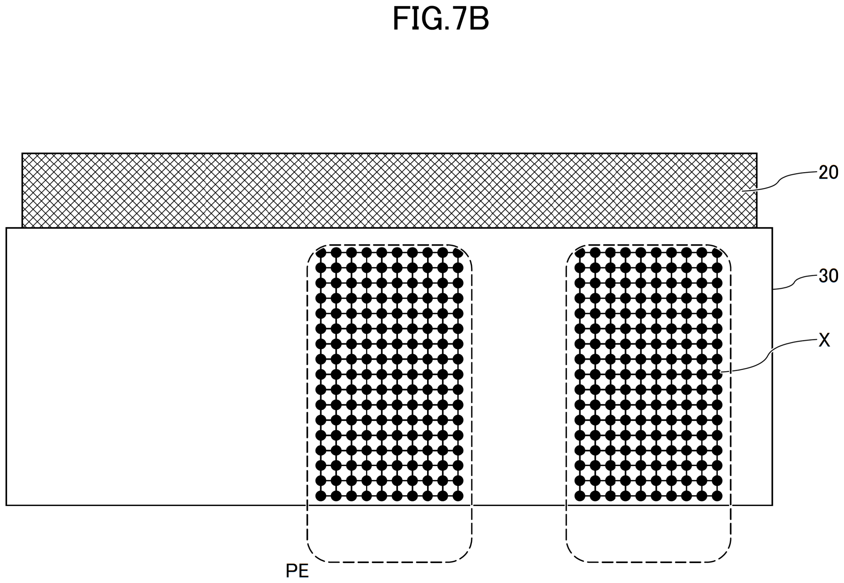

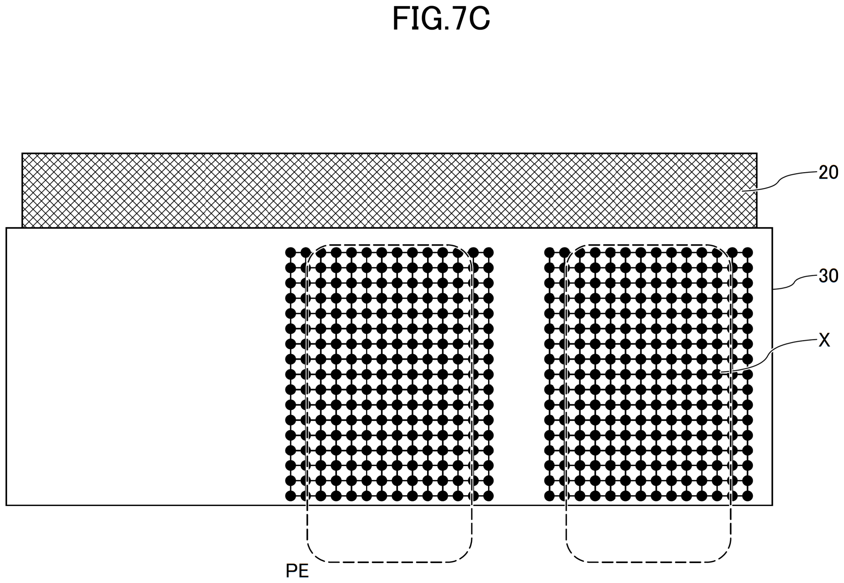

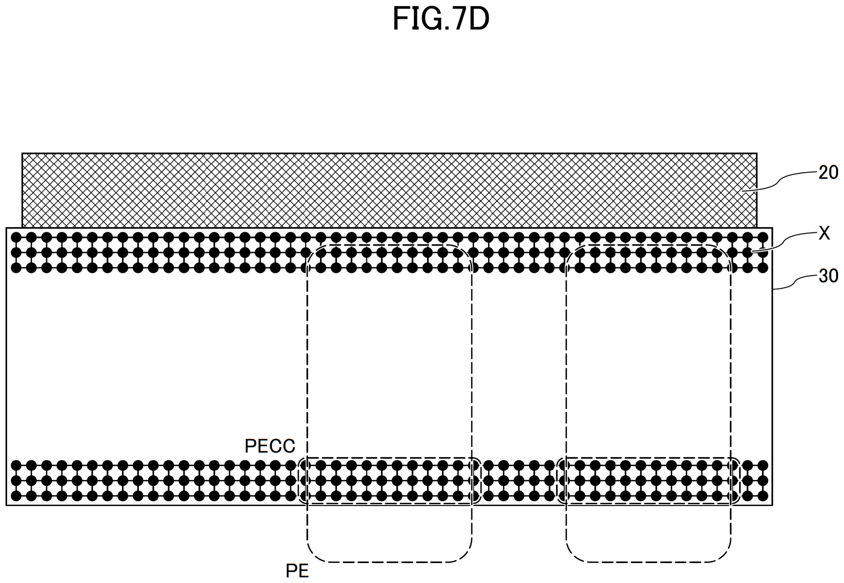

[Figs. 7A to 7D] Fig. 7A is a schematic top view for illustrating an example of adhesive portions X disposed on the negative electrode 20 in the battery member assembly of the present embodiment. Fig. 7B is a schematic top view (part 1) for illustrating another example of the adhesive portions X disposed on the negative electrode 20 in the battery member assembly of the present embodiment. Fig. 7C is a schematic top view (part 2) for illustrating another example of the adhesive portions X disposed on the negative electrode 20 in the battery member assembly of the present embodiment. Fig. 7D is a schematic top view (part 3) for illustrating yet another example of the adhesive portions X disposed on the negative electrode 20 in the battery member assembly of the present embodiment.

In Figs. 7A to 7D, the structure in which a separator 30 is disposed on a negative electrode 20 is illustrated.

As illustrated in Fig. 7B, the adhesive portions X may be disposed at a position at which a positive electrode 10 is installed (intended positive electrode-installation position PE) when a battery is formed. By disposing the adhesive portions X in the above-described manner, the adhesive portions X can be utilized as an alignment marker for the positive electrode 10, and the positional accuracy in the installation of the positive electrode 10 can be improved.

As illustrated in Fig. 7C, the adhesive portions X may be disposed on the periphery of the position at which a positive electrode 10 is installed (intended positive electrode-installation position PE) when a battery is formed. By disposing the adhesive portions X in the above-described manner, the adhesive disposed on the periphery of the intended positive electrode-installation position is adhered to another battery member, battery member assembly, or the like, thereby obtaining a stronger battery.

As illustrated in Fig. 7D, the adhesive portions X may be disposed at the position at which a positive electrode current collector is installed (intended positive electrode current collector-installation position PECC) when a battery is formed. In this case, the adhesive of the adhesive portions X preferably has an insulation property.

Generally, the position where the positive electrode current collector and a negative electrode face each other when a positive electrode is installed is likely to cause ignition and smoking at the time of production of a battery, and therefore is a region in which formation of an insulating layer is recommended. Therefore, the safety of the battery is improved by disposing the adhesive having an insulation property at the intended positive electrode current collector-installation position.
(Method for producing battery member assembly and apparatus for producing battery member assembly) The method for producing the battery member assembly of the present embodiment includes an adhesive forming liquid composition application step, an adhesive formation step, and a bonding step, preferably further includes an aging step, and may further include a battery member assembly processing step and other steps, as necessary. The apparatus for producing the battery member assembly of the present embodiment includes an adhesive forming liquid composition applicator, an adhesive forming liquid composition impregnation device, an adhesive forming device, and a bonding device, preferably further includes an aging device, and may further include a battery member assembly processing device and other devices, as necessary. The method for producing the battery member assembly can be suitably performed by the apparatus for producing the battery member assembly.
<Adhesive forming liquid composition application step and adhesive forming liquid composition applicator> The adhesive forming liquid composition application step is a step of applying an adhesive forming liquid composition to a first battery member having a porous structure. The adhesive forming liquid composition applicator is a device configured to apply an adhesive forming liquid composition to a first battery member having a porous structure. The adhesive forming liquid composition application step can be suitably performed by the adhesive forming liquid composition applicator.

The adhesive forming liquid composition applicator is not particularly limited, and may be appropriately selected according to the intended purpose. Examples of the adhesive forming liquid composition applicator include applicators for spin coating, casting, microgravure coating, gravure coating, bar coating, roll coating, wire coating, dip coating, slit coating, capillary coating, spray coating, nozzle coating, gravure printing, screen printing, flexographic printing, offset printing, reverse printing, inkjet printing, and the like. Among the above applicators, an applicator using a liquid discharge method, such as inkjet printing, jet dispensing, or the like, is preferable from the viewpoint of application of the adhesive forming liquid composition without contact with a battery member.

When the adhesive forming liquid composition applicator uses the above liquid discharge method, a discharge amount can be precisely adjusted. For example, even for a battery member having a porous structure in which the porosity varies, an appropriate amount of the adhesive forming liquid composition can be applied to an appropriate region by controlling the discharge amount of the adhesive forming liquid composition, thereby appropriately forming one or more adhesive portions X.

When the adhesive forming liquid composition applicator uses the above liquid discharge method, any pattern can be formed at any position of the battery member. The adhesive forming liquid composition or adhesive may be directly applied onto the first battery member, for example, from a liquid discharging device. Moreover, the adhesive forming liquid composition may be temporarily applied to another member, such as a release liner, a transfer belt, or the like, followed by applying the adhesive forming liquid composition to the first battery member by transferring.

In the case where the first battery member has front and back surfaces, the adhesive layer may be formed on one surface or both surfaces of the first battery member.

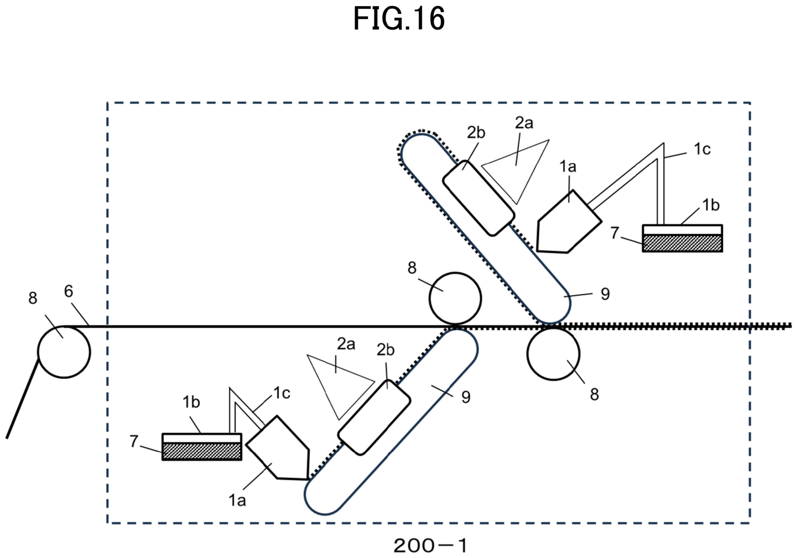

For example, as illustrated in Fig. 16, the adhesive layer may be formed on both surfaces of the first battery member using a transferring device including a transfer belt 9. At the time of transferring, the adhesive forming liquid composition or adhesive can be applied to the both surfaces of the first battery member at an angle smaller than 90 degrees, and therefore it is possible to stabilize the amount of the applied adhesive forming liquid composition or adhesive. Thus, the above embodiment is preferable.

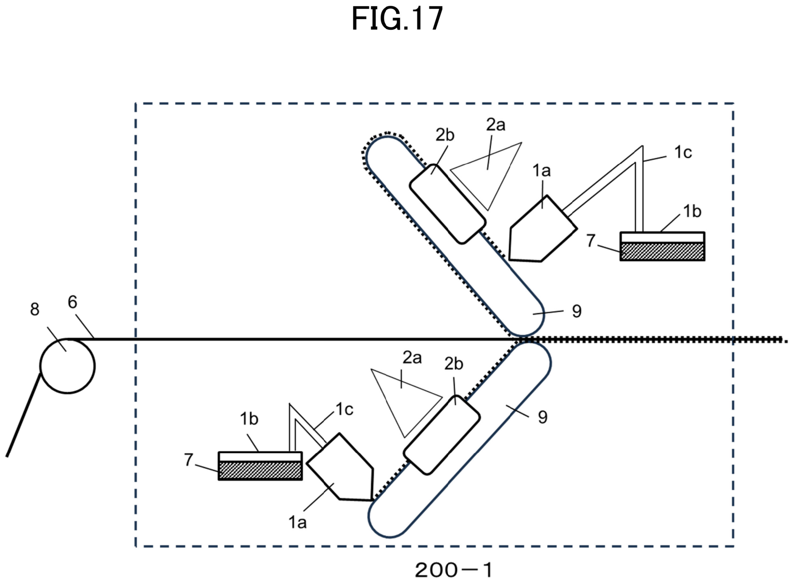

Alternatively, the adhesive forming liquid composition or adhesive may be applied to the both sides at the substantially same timings, as illustrated in Fig. 17. Such an embodiment is preferable in view of downsizing of a facility.

The adhesive forming liquid composition applied onto the transfer belt may be formed into an adhesive before or after transferring to the first battery member, but is preferably formed into an adhesive before transferring to the first battery member. As the adhesive forming liquid composition is formed into an adhesive, the adhesive forming liquid composition can be transferred onto the first battery member in a state in which the viscosity is increased and fluidity is reduced. As a result, excessive penetration of the adhesive forming liquid composition into the battery member is inhibited at the time of application, and a sufficient adhesion function can be exhibited with a small amount of the adhesive forming liquid composition.

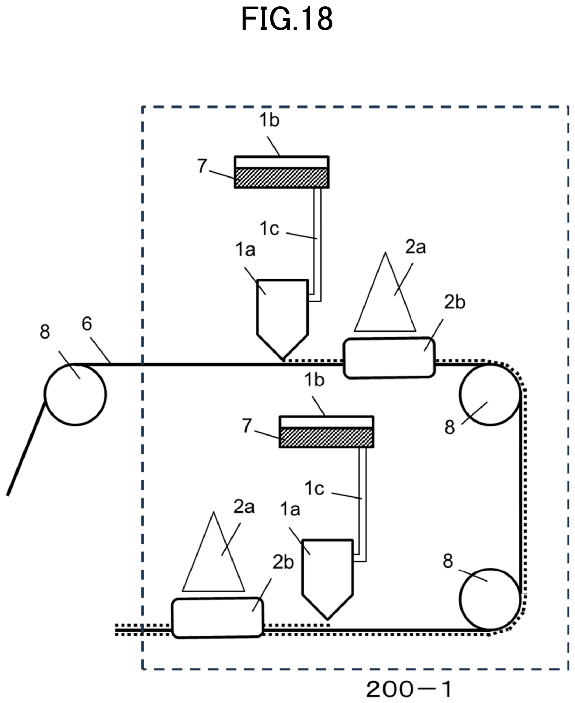

In addition, the adhesive forming liquid composition may be directly applied onto both surfaces of the first battery member, for example, using a liquid discharging device, as illustrated in Fig. 18. Such an embodiment is preferable because a transfer belt can be omitted, leading to downsizing of a facility.

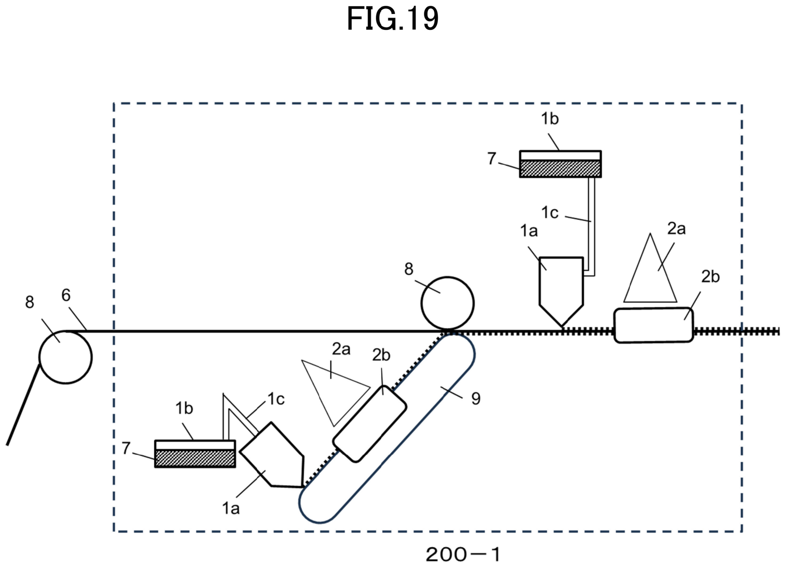

Further, an adhesive layer may be formed on both surfaces of the first battery member using a combination of the direct application method and the transfer application method, as illustrated in Fig. 19. In such an application method, the application of the adhesive forming liquid composition to the first battery member from the upper side is preferably performed by the direct application method, and the application of the adhesive forming liquid composition from the bottom of the first battery member is preferably performed by the transfer method in view of the gravity applied to the adhesive forming liquid composition or the adhesive.
<Adhesive formation step, adhesive forming liquid composition impregnation device, and adhesive forming device> The adhesive formation step is a step of, after a predetermined time has elapsed, applying energy to the adhesive forming liquid composition applied in the adhesive forming liquid composition application step to form an adhesive. The adhesive forming liquid composition impregnation device is a device configured to allow the first battery member to be impregnated with the adhesive forming liquid composition. The adhesive forming device is a device configured to apply energy to the adhesive forming liquid composition to form an adhesive. The adhesive formation step can be suitably performed by the adhesive forming liquid composition impregnation device and the adhesive forming device.

In the present specification, the above "predetermined time" is not particularly limited, and may be appropriately adjusted to obtain a desired height H of the adhesive protrusion portion Xa, or a desired width or area of the adhesive impregnation portion Xb in consideration of the viscosity or surface tension of the adhesive forming liquid composition, the porosity of the porous structure, the ambient temperature, and the like.

The adhesive forming liquid composition impregnation device is not particularly limited, and may be appropriately selected according to the intended purpose. Examples of the adhesive forming liquid composition impregnation device include devices configured to increase the ambient temperature to enhance an impregnation effect, and the like. Specifically, a heater, such as a hot air heater, an IR heater, or the like can be used.

The energy used in the adhesive formation step and the adhesive forming device is preferably light, and more preferably active energy rays. When active energy rays are applied to the adhesive forming liquid composition, the polymerizable compound included in the adhesive forming liquid composition undergoes a polymerization reaction to rapidly increase viscosity. The increase in the viscosity is preferable because a change in shape is unlikely to occur when the adhesive is formed on the battery member, and the adhesive can be fixed in the stable shape, regardless of the state of the member, such as the porosity or film thickness, surface free energy of the battery member or the like. Upon application of the energy, the adhesive forming liquid composition preferably increases the viscosity by 50% or greater.

The active energy rays are not particularly limited as long as the energy necessary for carrying out a polymerization reaction of the polymerizable compound can be provided. Examples of the active energy rays include ultraviolet rays (ultraviolet light), electron beams, α-rays, β-rays, γ-rays, X-rays, and the like. Among the above active energy rays, ultraviolet rays are preferable. When a light source of particularly high energy is used, a polymerization reaction can be allowed to proceed without using a polymerization initiator.

The radiation intensity of the active energy rays is not particularly limited, and may be appropriately selected according to the intended purpose. The radiation intensity is preferably 100 mW/cm² or greater and 20 W/cm² or less, more preferably 300 mW/cm² or greater and 20 W/cm² or less, and yet more preferably 1 W/cm² or greater and 20 W/cm² or less.

When the radiation intensity of the active energy rays is 100 mW/cm² or greater, the polymerizable compound included in the adhesive forming liquid composition is sufficiently polymerized so that the structure of the adhesive portions X can be easily fixed, and, when the battery member assembly in a battery stack is immersed in an electrolytic solution to function as a battery, the adhesive does not dissolve or is not swollen by the electrolytic solution, thereby ensuring favorable battery characteristics.

When the radiation intensity of the active energy rays is 20 W/cm² or less, excessive heat is not generated at the irradiation of the active energy rays so that deformation or damage of the battery member does not occur.
<Bonding step and bonding device> The bonding step is a step of bonding the first battery member to a second battery member via the adhesive. The bonding device is a device configured to bond the first battery member to a second battery member via the adhesive. The bonding step can be suitably performed by the bonding device.

The bonding device is not particularly limited, and may be appropriately selected according to the intended purpose. For example, the bonding device may include an alignment mechanism configured to arrange each member at an accurate position, or the like.

### <Aging step and aging device>

The aging step is a step of performing heating or deaeration, or both heating and deaeration so that a rate of change in a degree of polymerization of the adhesive is 0.1% or greater. The aging device is a device configured to perform heating or deaeration, or both heating and deaeration on the adhesive. The aging step can be suitably performed by the aging device. The aging step may be performed after the adhesive forming step, in which the adhesive is formed on the first battery member, and before or after the bonding step. The aging step is preferably performed after the bonding step. Since the aging step is performed after the bonding step, the adhesion can be made stronger, and the period in which the surface of the adhesive is exposed can be shortened, minimizing deposition of foreign matter on the adhesive.

By performing the aging step, the degree of polymerization of the constituent substances of the adhesive can be increased. Since the adhesive obtained at the adhesive formation step includes a relatively low molecular weight component, the adhesive is easily adhered to another member. If the bonding step and the aging step are carried out in such a state, polymerization of the remaining polymerizable compound is progressed to increase heat resistance and viscosity, while the battery member is fixed. Therefore, heating or deaeration, or both heating and deaeration of the adhesive can be performed at the aging step without changing the shape of the adhesive itself.

The rate of change in the degree of polymerization of the adhesive at the aging step is 0.1% or greater, and preferably 1.5% or greater. When the rate of change in the degree of polymerization of the adhesive is 0.1% or greater, a molecular weight of the adhesive increases so that the adhesive strength between the first battery member and the second battery member is improved, and it is unlikely to cause reduction in battery characteristics due to misalignment caused by the shape change of the adhesive or due to dissolution of the adhesive.

Since the amount of the low molecular weight component is reduced, as well as increasing the molecular weight (increase in the degree of polymerization) at the aging step, the strength of the adhesive itself is improved so that adhesive strength between the battery members bonded to each other is increased.

Since the amount of the low molecular weight component is reduced, as well as increasing the molecular weight (increase in the degree of polymerization) at the aging step, reduction in battery characteristics, which is caused, for example, by a reaction between the low molecular weight component and an electrode material, such as an electrolytic solution, can be minimized.

In the case where a bifunctional or higher polymerizable compound is included in the adhesive forming liquid composition, the crosslink density can be improved by the aging step, and therefore the adhesive having high adhesive strength, and high resistance to an electrolytic solution or heat can be obtained.

By performing the aging step, unnecessary components attached to or included in the battery member, such as moisture, an organic solvent, and the like, can be removed. Thus, deterioration of an electrode active material caused when unnecessary components are included inside a battery cell, and problems caused by the deteriorated electrode active material, such as reduction in a battery capacity, increase in internal resistance, low storage stability, and the like can be inhibited. Heating or deaeration, or both heating and deaeration are preferably performed under reduced pressure because removal of the unnecessary components is facilitated, and the unnecessary components included inside the battery member assembly can be efficiently removed.

A method for measuring the degree of polymerization of the adhesive is not particularly limited, and may be appropriately selected according to the intended purpose. Examples of the measuring method include a method for measuring the degree of polymerization by infrared spectroscopy. Specifically, a peak value at 820 cm⁻¹ to 800 cm⁻¹ corresponding to =CH out-of-plane bending vibrations, a peak value at 1,430 cm⁻¹ to 1,400 cm⁻¹ corresponding to =CH in-plane bending vibrations, or a peak value at 1,640 cm⁻¹ to 1,620 cm⁻¹ corresponding to C=C is read, and compared with the numerical value of the adhesive before irradiated with light, thereby calculating the degree of polymerization.

The heating temperature at the aging step is not particularly limited, and may be appropriately selected according to the intended purpose, as long as unnecessary components are removed without impairing the function of each battery member. In the case where each battery member is formed of a heat resistant material, the heating temperature is preferably 60°C or higher and 160°C or lower, and more preferably 100°C or higher and 130°C or lower.

When the heating temperature is 60°C or higher, the moisture in the adhesive can be sufficiently removed.

When the heating temperature is 160°C or lower, polymerization of the low molecular weight component included in the adhesive can be performed while inhibiting decomposition of an electrode active material of an electrode active material layer or melting of a binder resin included in the electrode active material layer or a resin component of a separator, or the like.

In the case where a separator of a polyolefin resin or the like is used as a battery member, the heating temperature is preferably 60°C or higher and 100°C or lower because the heating temperature does not affect the shutdown function of the separator achieved by heat shrinkage or melting of the resin.

The heating time at the aging step is not particularly limited, and may be appropriately selected according to the intended purpose, as long as unnecessary components are removed without impairing the function of each battery member. For example, the heating time is 30 minutes or longer and 24 hours or shorter.

The aging step may be performed at the ambient pressure or reduced pressure (in vacuum), but is preferably performed at the reduced pressure (e.g., 10 Pa) using a vacuum oven or the like.

The pressure at the aging step is not particularly limited, and may be appropriately selected according to the intended purpose, as long as unnecessary components are removed without impairing the function of each battery member. For example, the pressure can be set to 10 Pa or greater and 101,325 Pa (ambient pressure) or less.

The gas atmosphere during the aging step is not particularly limited, and may be appropriately selected according to the intended purpose, as long as unnecessary components are removed without impairing the function of each battery member. Examples of the gas atmosphere include: inert gas, such as a nitrogen gas, an argon gas, and a helium gas; the atmosphere (air); and the like. Among the above gases, air (atmospheric air) is used in view of production cost.

### <Battery member assembly processing step and battery member assembly processing device>

The battery member assembly processing step is a step of processing the battery member assembly obtained in the bonding step, and is a processing step in which the battery member is cut according to an intended battery form before the aging step.

The battery member assembly processing device is a device configured to process the battery member assembly. The battery member assembly processing step can be suitably performed by the battery member assembly processing device.

The battery member assembly processing step is a step of cutting or trimming the battery member assembly obtained in the bonding step for producing a battery.

The battery member assembly processing device is not particularly limited, and may be appropriately selected according to the intended purpose. Examples of the battery member assembly processing device include a laser, a blade, a punching blade, and the like.

In addition, the battery member assembly processing device 200-5 may include a device 5 including a laser output device, a cutting blade, a punching blade, or the like for cutting the battery member assembly according to the intended battery form.

The battery member assembly processing step preferably further includes a battery member assembly stacking step or a battery member assembly winding step. The battery member assembly stacking step is a step of stacking battery member assemblies obtained by the bonding step. The battery member assembly winding step is a step of winding the battery member assembly obtained by the bonding step. The battery member assembly processing device preferably further includes a battery member assembly stacking device or a battery member assembly winder. The battery member assembly stacking device is configured to stack battery member assemblies. The battery member assembly winder is configured to adhere an edge of the battery member assembly to a rotator, and rotate the rotator to wind the battery member assembly winder.

The battery member assembly stacking step is not particularly limited, and may be appropriately selected according to the intended purpose. Examples of the battery member assembly stacking step include: a method in which the battery member assembly is cut into multiple sheets and the sheets are stacked; a method in which the battery member assembly is folded back by zigzag folding to stack portions of the battery member assembly; and the like.

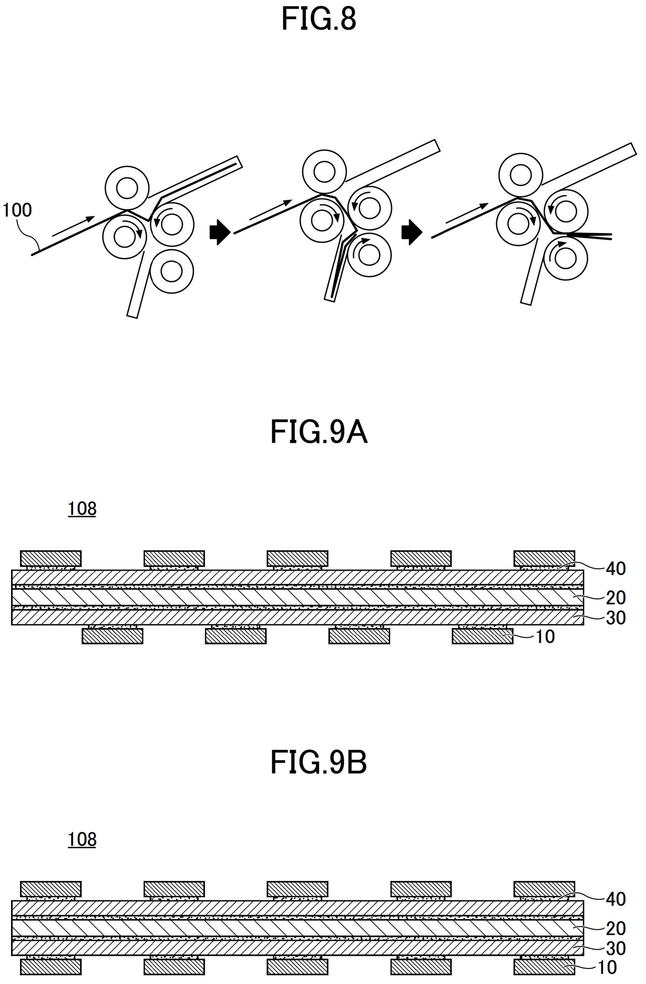

In the case where the method in which the battery member assembly 100 is folded back by zigzag folding to stack the portions of the battery member assembly is used as the battery member assembly stacking step, a device having a conveyance mechanism in which a plurality of rollers are appropriately disposed, as illustrated in Fig. 8, can be used as the battery member assembly stacking device. Fig. 8 is a schematic view illustrating an example of the configuration of the battery member assembly stacking device.

In the case where the method in which the battery member assembly 100 is folded back by zigzag folding to stack the portions of the battery member assembly is used as the battery member assembly stacking step, the battery member assembly is preferably in the form of a sheet in which a positive electrode 10, a separator 30, and a negative electrode 20 are bonded together as illustrated in Figs. 9A to 9B. The battery member assembly 108 has a structure in which the separator 30 is bonded to the negative electrode 20, and positive electrodes 10 are disposed at intervals on the separator 30.

Fig. 9A is a schematic cross-sectional view (part 6) illustrating an example of the structure of the battery member assembly of the present embodiment. Fig. 9B is a schematic cross-sectional view (part 7) illustrating an example of the structure of the battery member assembly of the present embodiment.

The zigzag folding structure can be produced by accurately folding the battery member assembly at positions where the positive electrodes 10 are not bonded, utilizing the difference in flexibility of the battery member assembly between region where the positive electrode 10 is bonded and the region where the positive electrode 10 is not bonded.

In the above folding mechanism, the pressure is applied to the battery members by pressurizing from the outer side toward the members of the battery member assembly, when the battery member assembly is passed through rollers, and therefore the bonding between the members becomes stronger. In addition, the folding mechanism using conveyance with rollers does not require a stage for zigzag folding, which is typically provided in the existing zigzag folder, and therefore, a time for battery cell change is not needed, and continuous production is possible.

In addition to the above, a reciprocating folding mechanism or a rotary folding mechanism can also be used as the battery member assembly stacking device.

### <Other steps and other devices>

Other steps are not particularly limited, and may be appropriately selected according to the intended purpose. Examples of the other step include: a solvent removal step in the case where a volatile solvent is included in the adhesive forming liquid composition; a thermocompression bonding step in the case where a separator provided with an adhesive layer of a hot-melt resin is used as a battery member constituting the battery member assembly; and the like. The solvent removal step is a step in which the solvent included in the adhesive forming liquid composition is removed. Other devices are not particularly limited, and may be appropriately selected according to the intended purpose. Examples of the other devices include: a solvent removal device configured to remove the solvent in the adhesive forming liquid composition, in the case where a volatile solvent is included in the adhesive forming liquid composition; a thermocompression bonding device in the case where a separator provided with an adhesive layer of a hot-melt resin is used as a battery member constituting the battery member assembly; and the like. The other steps can be suitably performed by the other devices.

### <<Thermocompression step of separator provided with adhesive layer of hot-melt resin>>

In the case where a separator provided with an adhesive layer of a hot-melt resin is used as a battery member constituting the battery member assembly, a thermocompression bonding step may be included. The thermocompression bonding step is a step in which at least one selected from the group consisting of heating, compressing, and deaeration is performed to bond the separator to another separator, or to bond the separator to an electrode. The thermocompression step can be suitably performed by the thermocompression bonding device.

By performing the thermocompression step, the battery members, for example, the separator and an electrode, are stacked and bonded together by thermocompression bonding, so that the positional deviation of the electrode and the separator can be inhibited in sequential steps of the production process. Further, as the adhesive of the present disclosure is formed on the separator provided with the adhesive layer, misalignment can be inhibited during stacking of the battery members, as well as after stacking of the battery members. Specifically, misalignment of the separator and the electrode can be inhibited during stacking, as well as inhibiting positional deviation in the stack after stacking the predetermined number of the electrodes and the separators.

The heating temperature at the thermocompression step is not particularly limited, and may be appropriately selected depending on the intended purpose, as long as the hot-melt resin can be softened or melted by heating to exhibit adhesion without impairing the function of each battery member. The heating temperature is preferably 60°C or higher and 180°C or lower, and more preferably 100°C or higher and 160°C or lower.

When the heating temperature is 60°C or higher, the temperature exceeds a glass transition temperature (Tg) or softening point of most of hot-melt resins, and therefore fluidity of the hot-melt resin increases. The increase in the fluidity leads to improvement in wettability of the hot-melt resin to a battery member, thereby increasing adhesive strength between battery members.

When the heating temperature is 180°C or lower, bonding between battery members can be performed without causing decomposition of an electrode active material of an electrode active material layer, melting of a binder included in an electrode active material layer, a resin component of a separator, or the like, or thermal deformation of a separator.

In the case where a separator of a polyolefin resin or the like is used as a battery member, the heating temperature is preferably 60°C or higher and 100°C or lower because the above range of the heating temperature does not affect the shutdown function of the separator achieved by heat shrinkage or melting of the resin.

The apparatus for producing the battery member assembly of the present embodiment will be described with reference to drawings hereinafter. The redundant description may be omitted.

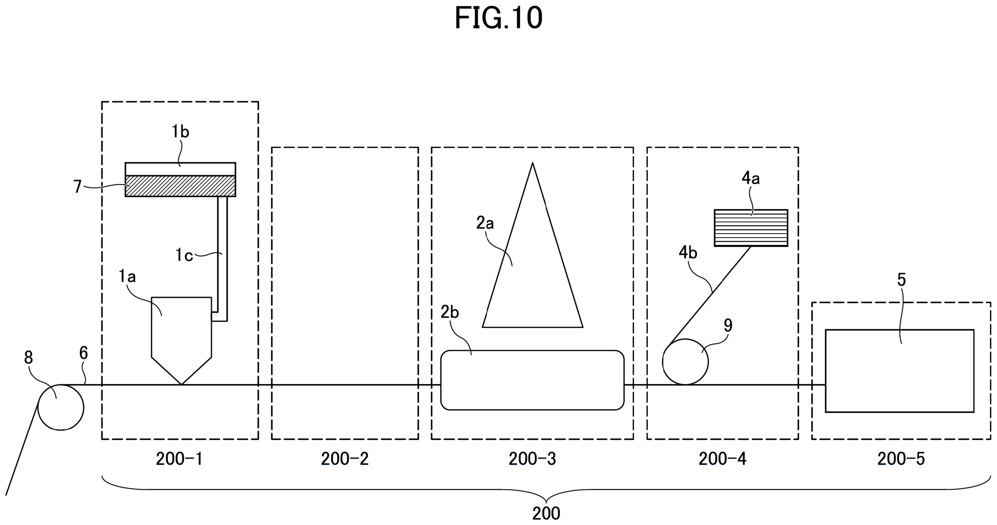

[Fig. 10] Fig. 10 is a schematic view illustrating an example of a structure of an apparatus for producing the battery member assembly of the present embodiment.

As illustrated in Fig. 10, the apparatus for producing the battery member assembly 200 includes an adhesive forming liquid composition applicator 200-1, an adhesive forming liquid composition impregnation device 200-2, an adhesive forming device 200-3, a bonding device 200-4, an aging device or a battery member assembly processing device 200-5, and a conveyance mechanism 8.

The adhesive forming liquid composition applicator 200-1 includes an inkjet device 1a, a storage container 1b in which the adhesive forming liquid composition 7 is stored, and a supply tube 1c for supplying the adhesive forming liquid composition 7 stored in the storage container to the inkjet device 1a. The adhesive forming liquid composition applicator 200-1 is configured to discharge the adhesive forming liquid composition 7 from the inkjet device 1a, thereby applying the adhesive forming liquid composition 7 to the first battery member 6.

The storage container 7 may be configured to be integrated with the battery member assembly production device 200, or may be configured to be detachable from the battery member assembly production device 200. In addition, the container may be a container used for adding the adhesive forming liquid composition to the storage container 7 configured to be integrated with the battery member assembly production device 200, or to the storage container 7 configured to be detachable from the battery member assembly production device 200.

Any container and tube can be selected for the storage container 7 and the supply tube 1c, as long as the adhesive forming liquid composition 7 can be stably stored and supplied. The material of the storage container 7 or the supply tube 1c is not particularly limited, and may be appropriately selected according to the intended purpose. The material preferably has a light-blocking property in a relatively short wavelength region, such as ultraviolet light and visible light. Thus, in the case where the adhesive forming liquid composition 7 includes the polymerizable compound, onset of polymerization by external light can be inhibited.

Examples of the adhesive forming liquid composition impregnation device 200-2 include a device configured to increase the ambient temperature to enhance an impregnation effect. Specifically, a heater, such as a hot air heater, an IR heater, or the like can be used.

The adhesive forming device 200-3 includes a light irradiation device 2a and a polymerization inert gas-circulation device 2b.

The light irradiation device 2a is an example of an irradiation device configured to apply active energy rays, such as heat, light, or the like to the adhesive forming liquid composition 7 to polymerize the polymerizable compound included in the adhesive forming liquid composition 7.

The light irradiation device 2a is not particularly limited, as long as the polymerization of the polymerizable compound in the adhesive forming liquid composition 7 can be initiated and progressed. The light irradiation device 2a can be appropriately selected according to absorption wavelengths of the photopolymerization initiator included in the adhesive forming liquid composition 7. Examples of the light irradiation device 2a include ultraviolet light sources, such as high-pressure mercury lamps, metal halide lamps, hot cathode tubes, cold cathode tubes, LEDs, and the like. Since light having shorter wavelengths is generally likely to reach a deeper portion, the light source is preferably selected according to a thickness of an adhesive to be formed.

The polymerization inert gas-circulation device 2b serves to reduce the concentration of polymerization-active oxygen included in air, and to allow the polymerizable compound present in the vicinity of the surface of the adhesive forming liquid composition 7 to proceed with a polymerization reaction without being inhibited.

The polymerization inert gas to be used is not particularly limited, and may be appropriately selected according to the intended purpose, as long as the above function can be exhibited. Examples of the polymerization inert gas include nitrogen, carbon dioxide, argon, and the like.

The flow rate of the polymerization inert gas is not particularly limited, and may be appropriately selected according to the intended purpose. In view of an effective inhibitory effect, the O₂ concentration is preferably less than 20% (the atmosphere having a lower oxygen concentration than air), more preferably 0% or greater and 15% or less, and yet more preferably 0% or greater and 5% or less.

The polymerization inert gas-circulation device 2b is preferably provided with a temperature adjuster configured to control the temperature in order to realize the conditions for the polymerization to progress stably.

The bonding device 200-4 includes a storage container 4a in which second battery members 4b are stored. The second battery member 4b is transported by the conveyance device 9 configured to transport the second battery member 4b, and is placed and bonded onto the adhesive formed on the first battery member 6.

The second battery member 4b may be in the form of a roll, or in the form of a sheet.

The bonding device 200-4 may include an alignment mechanism, which is equipped with a camera or the like, and accurately adjusts a bonding position of the second battery member 4b.

The battery member assembly processing device 200-5 includes a device 5 including a laser output device, a cutting blade, a punching blade, or the like, which is configured to cut the battery member assembly according to the intended battery form.

The aging device 200-5 includes an aging device 5 configured to perform heating or deaeration, or both heating and deaeration so that the rate of change in the degree of polymerization of the adhesive is 0.1% or greater.

As the aging device 5, for example, an existing heater (heat treatment device) can be used. Specifically, a heater (heat treatment device) using hot air drying or IR ray drying can be used. In addition, a heater (heat treatment device), such as a vacuum oven, using vacuum heat drying can be used. Moreover, as the aging device 5, a heater (heat treatment device) using hot air drying and IR ray drying in combination may be used. Instead of the heater (heat treatment device), only a pressure reduction (vacuum) device may be used.

The conveyance mechanism 8 and the conveyance device 9 are not particularly limited, and may be appropriately selected according to the intended purpose, as long as the first battery member 6 and the second battery member 4b can be transported. For example, each of the conveyance mechanism 8 and the conveyance device 9 may include an electrostatic attraction mechanism.

### (Battery stack)

The battery stack of the present embodiment includes a battery member assembly, and may further include other members, as necessary. The description of the features overlapping with the features described in the above section of (Battery member assembly) will be omitted.

In the battery stack, positive electrodes and negative electrodes are alternately stacked via a separator. The number of the positive electrodes stacked and the number of the negative electrodes stacked are not particularly limited, and may be appropriately selected according to the intended purpose.

The shape of the battery stack is not particularly limited, and may be appropriately selected according to the intended purpose. Examples of the shape of the battery stack include a laminate stack, a zigzag folded stack, a wound stack, a cylinder stack in which steel electrodes are separators are spirally disposed, a cylinder stack in which pellet electrodes and separators are combined, a coin stack in which pellet electrodes and separators are stacked, and the like.

### (Method for producing battery stack and apparatus for producing battery stack)

The method for producing the battery stack in association with the present embodiment includes a battery member assembly production step and a battery member assembly stacking step, and may further include other steps, as necessary. The battery member assembly production step includes producing battery member assemblies. The battery member assembly stacking step includes stacking the battery member assemblies.

The apparatus for producing the battery stack in association with the present embodiment includes a battery member assembly production device configured to produce battery member assemblies and a battery member assembly stacking device configured to stack the battery member assemblies, and may further include other devices, as necessary. The method for producing the battery stack can be suitably performed by the apparatus for producing the battery stack. The battery member assembly production step corresponds to the above method for producing the battery member assembly, and the battery member assembly production device corresponds to the above apparatus for producing the battery member assembly. Thus, the redundant description will be omitted.

The apparatus for producing the battery stack of the present embodiment will be described with reference to drawings hereinafter. In the drawings, the same constituent components are denoted by the same reference numerals, and the redundant description may be omitted.

### [Figs. 11 and 12]

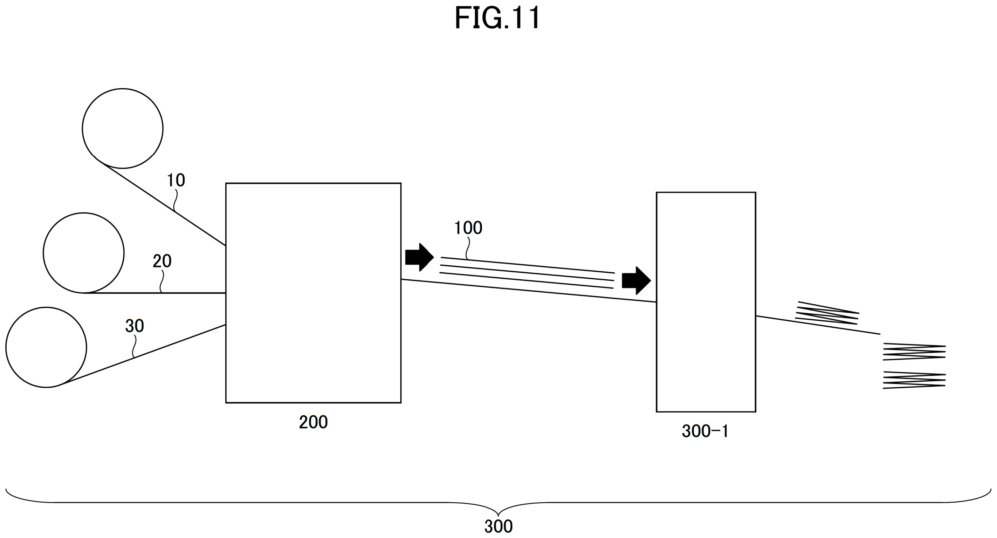

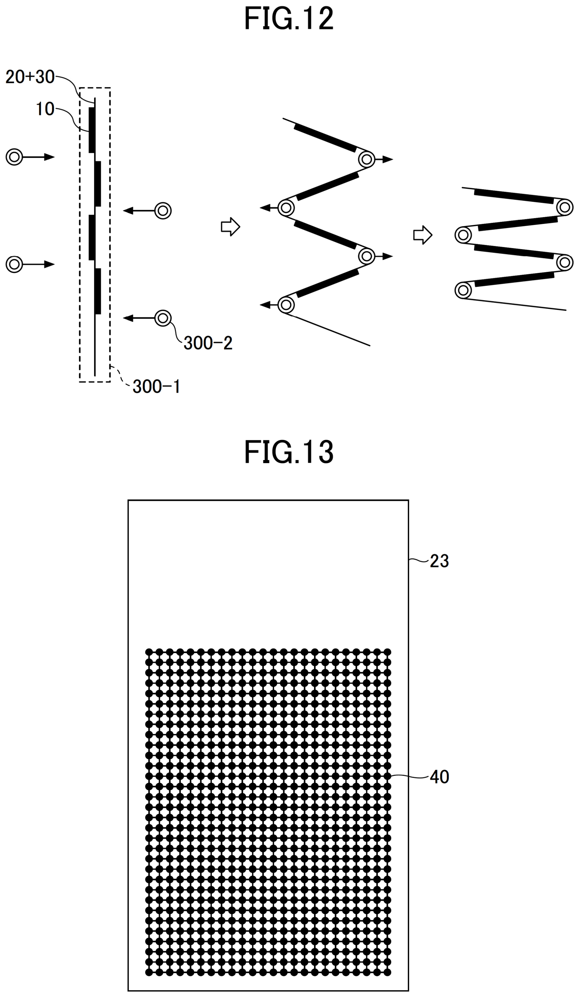

Fig. 11 is a schematic view illustrating an example of the configuration of the apparatus for producing the battery stack of the present embodiment. Fig. 12 is a schematic view illustrating an example of folding processing performed by the apparatus for producing the battery stack of the present embodiment.

The apparatus for producing the battery stack 300 includes a battery member assembly production device 200 and a battery member assembly stacking device 300-1. As the battery member assembly production device 200, the production device illustrated in Fig. 10 can be employed, and the redundant description will be omitted.

The battery member assembly stacking device 300-1 is configured by battery member assembly folding rollers for performing transportation and folding processing of the battery member assembly, and a base press stopper configured to appropriately control folding processing positions. As the folding processing mechanism, the battery member assembly is transported by the battery member assembly folding rollers, and the battery member assembly that is transported is stopped from traveling by the battery member assembly press stopper to partially deform the battery member assembly, and the deformed portion of the battery member assembly is caught by other rollers, thereby achieving folding processing. Alternatively, as illustrated in Fig. 12, the battery member assembly rollers 300-2 are pushed into the battery member assembly from the surface and back of the battery member assembly, thereby achieving folding processing. For the folding processing, the battery member assembly is preferably in the state in which the negative electrode 20, the separator 30, and the positive electrode 10 are appropriately bonded, as illustrated in Fig. 12. Thus, it is not necessary to arrange a member that is missing after folding processing, which can avoid misalignment of a member caused when additionally arranging the member, and shorten the time for arranging members, so that an effect of improving quality or a production rate of the battery member assembly can be obtained.

### (Power storage device)

The power storage device of the present embodiment includes a battery stack, and may further include other members, as necessary. The description overlapping with the features described in the section of the above (Battery stack) will be omitted.

The power storage device is not particularly limited, and may be appropriately selected according to the intended purpose. Examples of the power storage device include nonaqueous power storage elements (e.g., nonaqueous secondary batteries and nonaqueous capacitors), and the like.

The nonaqueous power storage element preferably includes a battery stack, a nonaqueous electrolyte, and a casing.

<Nonaqueous electrolyte> The nonaqueous electrolyte is not particularly limited, and may be appropriately selected according to the intended purpose. Examples of the nonaqueous electrolyte include a nonaqueous electrolytic solution and the like.

The nonaqueous electrolytic solution is an electrolytic solution in which an electrolyte salt is dissolved in a nonaqueous solvent.

### <<Nonaqueous solvent>>

The nonaqueous solvent is not particularly limited, and may be appropriately selected according to the intended purpose, as long as the nonaqueous solvent can dissolve the electrolyte salt. As the nonaqueous solvent, an aprotic organic solvent is preferably used.

Examples of the aprotic organic solvent include carbonate-based organic solvents, such as linear carbonates, cyclic carbonates, and the like. Among the above aprotic organic solvents, linear carbonates are preferable from the viewpoints of high dissolving powder with respect to the electrolyte salt. Examples of the linear carbonates include dimethyl carbonate (DMC), diethyl carbonate (DEC), methyl ethyl carbonate (EMC), and the like. Examples of the cyclic carbonate include propylene carbonate (PC), ethylene carbonate (EC), butylene carbonate (BC), vinylene carbonate (VC), and the like.

Examples of the nonaqueous solvent other than the carbonate-based organic solvent include: ester-based organic solvents, such as cyclic esters, linear esters, and the like; and ether-based organic solvents, such as cyclic ethers, linear ethers, and the like.

Examples of the cyclic esters include γ-butyrolactone (γBL), 2-methyl-γ-butyrolactone, acetyl-γ-butyrolactone, γ-valerolactone, and the like. Examples of the linear ester include alkyl propionate, dialkyl malonate, alkyl acetate (e.g., methyl acetate (MA) and ethyl acetate), alkyl formate (e.g., methyl formate (MF) and ethyl formate), and the like. Examples of the cyclic ether include tetrahydrofuran, alkyl tetrahydrofuran, alkoxy tetrahydrofuran, dialkoxy tetrahydrofuran, 1,3-dioxolane, alkyl-1,3-dioxolane, 1,4-dioxolane, and the like. Examples of the linear ether include 1,2-dimethoxyethane (DME), diethyl ether, ethylene glycol dialkyl ether, diethylene glycol dialkyl ether, triethylene glycol dialkyl ether, tetraethylene glycol dialkyl ether, and the like.

The above nonaqueous solvents may be used alone or in combination of two or more.

The amount of the linear carbonate is preferably 40 percent by mass or greater, and more preferably 50 percent by mass or greater, relative to the total amount of the nonaqueous solvent. When the amount of the linear carbonate is 40 percent by mass or greater relative to the total amount of the nonaqueous solvent, it is advantageous because permeability of the nonaqueous electrolytic solution or ion diffusivity are improved.

<<Electrolyte salt>> The electrolyte salt is not particularly limited, and may be appropriately selected according to the intended purpose, as long as the electrolyte salt has high ion conductivity and can be dissolved in the nonaqueous solvent.

Examples of the cationic component constituting the electrolyte salt include alkali metal salts and the like. The alkali metal salts are not particularly limited, and may be appropriately selected according to the intended purpose. Examples of the alkali metal salts include lithium hexafluorophosphate, lithium tetrafluoroborate, lithium hexafluoroarsenate, lithium trifluoromethane sulfonate, lithium bis(trifluoromethylsulfonyl)imide, lithium bis(pentafluoroethylsulfonyl)imide, and the like. The above electrolyte salts may be used alone or in combination of two or more.

The concentration of the electrolyte salt in the nonaqueous electrolytic solution is not particularly limited, and may be appropriately selected according to the intended purpose. The concentration of the electrolyte salt is preferably 1 mol/L or greater and 4 mol/L or less.

### <Casing>

The casing is not particularly limited as long as the battery stack and the nonaqueous electrolyte can be sealed in the casing.

The shape of the nonaqueous power storage element is not particularly limited. Examples of the shape of the nonaqueous power storage element include a laminate cell in which plate electrodes are stacked, a cylinder cell in which a sheet electrode and a separator are spirally arranged, a cylinder cell of an inside-out structure in which a pellet electrode and a separator are combined, a coin cell in which a pellet electrode and a separator are stacked.

The nonaqueous power storage element may be mounted on a portable device or the like. In the present specification, a device in which the nonaqueous power storage element is mounted may be referred to as a mounted device.

The nonaqueous power storage element and a base of the mounted device on which the nonaqueous power storage element is mounted may be bonded with an adhesive. In other words, the nonaqueous power storage element and a base of the mounted device on which the nonaqueous power storage element is mounted may be bonded together via an adhesive.

The number of the nonaqueous power storage elements mounted in the mounted device is not particularly limited, and may be appropriately selected according to the intended purpose, but is preferably two or more. In the mounted device in which two or more nonaqueous power storage elements are mounted, at least two nonaqueous power storage elements are preferably coupled to each other and are arranged in the form of an L shape on the base of the mounted device. The coupling region of the at least two nonaqueous power storage elements and the adhesion region where the nonaqueous power storage element and the mounted device are bonded with the adhesive preferably do not overlap with each other.

The mounted device may include members other than the nonaqueous power storage element in regions that are different from the region in which the nonaqueous power storage element is bonded. The other members are not particularly limited, and may be appropriately selected according to the intended purpose. Examples of the other members may include heat dissipation members, such as a heat dissipation fun, a heat dissipation tube, and the like.

The mounted device and the other members may be bonded by the adhesive used in one aspect of the present disclosure. For example, in the case where the mounted device and the other members are fixed by a screw or the like, the fixed position may be deviated due to loosening of the screw. By bonding with the adhesive, the nonaqueous power storage element and the heat dissipation member can be fixed at the predetermined position, and the resultant mounted device becomes resistant to vibration. Therefore, heat generated when the mounted device (e.g., a portable device, etc.) is operated using energy of an electrochemical element can be efficiently and more assuredly released. In the case where the battery and a chassis on which the battery is mounted are bonded using the adhesive used in one aspect of the present disclosure, heating and pressurizing are not necessary for bonding, and therefore a damage on the battery and the chassis can be reduced during bonding. The adhesive used in one aspect of the present disclosure means the adhesive obtained by polymerizing the adhesive forming liquid composition used in one aspect of the present disclosure.

For mounting the nonaqueous power storage element or other members in the mounted device, the adhesive may be applied by inkjet printing because the adhesive can be applied precisely and in a desired shape. In the case where the adhesive is applied by inkjet printing, the adhesive is preferably applied to the bonding region between the nonaqueous power storage element and the mounted device, and the bonding region between the other members and the mounted device by one scanning of an inkjet head in view of productivity.

### Examples

Examples of the present disclosure will be described hereinafter, but Examples shall not be construed as limiting the scope of the present disclosure. In Examples, Comparative Examples, Referential Examples, and Comparative Referential Examples, "part(s)" and "%" denote "part(s) by mass' and "percent by mass", respectively, unless otherwise specified.

Materials of battery member assemblies used in Examples and Comparative Examples are as follows.

### [Negative electrode] <Production of negative electrode>

In water, 97 parts by mass of graphite particles (average particle diameter: 10 µm, manufactured by JFE Chemical Corporation) serving as a negative electrode active material, 1 part by mass of cellulose serving as a thickening agent, and 2 parts by mass of an SBR resin (BM-451B, manufactured by Zeon Corporation) serving as a binder were homogeneously dispersed, thereby obtaining a negative electrode active material dispersion liquid. The dispersion liquid was applied onto a surface of an 8 µm-thick copper foil serving as a negative electrode substrate, and the obtained coating film was dried at 120°C for 10 minutes and pressed, thereby obtaining a negative electrode active material layer having a thickness of 60 µm. The same process as above was also performed on the other surface of the copper foil, and the resultant copper foil was cut in the size of 50 mm × 33 mm, thereby preparing a negative electrode.
[Positive electrode] In N-methylpyrrolidone (manufactured by FUJIFILM Wako Pure Chemical Corporation) serving as a solvent, 94 parts by mass of mixed particles of nickel, cobalt, and aluminum serving as a positive electrode active material, 3 parts by mass of acetylene black (Denka Black, manufactured by Denka Company Limited) serving as a conductive auxiliary agent, and 3 parts by mass of polyvinylidene fluoride (W#9700, manufactured by KUREHA CORPORATION) serving as a binder resin was homogeneously dispersed, thereby obtaining a positive electrode active material dispersion liquid. The dispersion liquid was applied onto a surface of a 15 µm-thick aluminum foil serving as an electrode substrate by die coating, and the coated film was dried at 120°C for 10 minutes, followed by pressing, thereby obtaining a positive electrode active material layer having a thickness of 50 µm. The same process as above was also performed on the other surface of the aluminum foil, and the resultant aluminum foil was cut in the size of 43 mm × 29 mm, thereby preparing a positive electrode.
[Film separator] A film separator (film thickness: 16 µm, manufactured by TORAY INDUSTRIES, INC.) was used.
[Paper separator] A paper separator (film thickness: 40 µm, manufactured by NIPPON KODOSHI CORPORATION) was used.
[Negative electrode-integrated separator] <Preparation of insulating layer forming liquid composition>

The following materials were mixed to prepare an insulating layer forming liquid composition.
Tricyclodecane dimethanol diacrylate (manufactured by DAICEL-ALLNEX LTD.): 29.0 parts by mass
Dipropylene glycol monomethyl ether (manufactured by Kanto Chemical Industry Co., Ltd.): 70.0 percent by mass
Irgacure 184 (manufactured by BASF): 1.0 parts by mass

After charging an inkjet printer with the insulating layer forming liquid composition, a discharge amount was controlled so that the insulating layer forming liquid composition was discharged at a constant rate, and the insulating layer forming liquid composition was discharged onto the negative electrode active material layer so that a film thickness of a resultant insulating layer became 20.0 µm. Immediately after the application of the insulating layer forming liquid composition, the region coated with the insulating layer forming liquid composition was irradiated with UV light in a N₂ atmosphere, thereby curing the insulating layer forming liquid composition. Next, the cured product was heated at 120°C for 1 minute in a hot-air drying oven to remove the solvent in the cured product, thereby obtaining a negative electrode-integrated separator having a porous structure.

[Adhesive forming liquid composition A] The following materials were mixed to prepare an adhesive forming liquid composition A.
Light acrylate PO-A (Tg: -22°C, manufactured by KYOEISHA CHEMICAL CO., LTD.): 97 parts by mass
Irgacure 184 (manufactured by BASF): 3 parts by mass The viscosity of the adhesive forming liquid composition A was measured by TVE-25L (cone plate type) manufactured by ADVANTEC TOYO KAISHA, LTD. at 25°C and 50 rpm, and was found to be 8.9 cps.

[Adhesive forming liquid composition B] The following materials were mixed to prepare an adhesive forming liquid composition B.
Light acrylate PO-A (Tg: -22°C) (manufactured by KYOEISHA CHEMICAL CO., LTD.): 77 parts by mass
KRM-9465 (Tg: -45°C) (manufactured by DAICEL-ALLNEX LTD.): 20 parts by mass Irgacure 184 (manufactured by BASF): 3 parts by mass The viscosity of the adhesive forming liquid composition B was measured by TVE-25L (cone plate type) manufactured by ADVANTEC TOYO KAISHA, LTD. at 25°C and 50 rpm, and was found to be 180 cps.

The evaluation items of the battery member assemblies obtained in Examples and Comparative Examples are as follows.

[Measurement of width W of adhesive impregnation portion Xb] The width W of the adhesive impregnation portion Xb in the battery member was measured by 3D observation using a microscope (digital microscope VHX-7000, manufactured by KEYENCE CORPORATION).

[Test 1: Evaluation of scratch hardness] In order to confirm the effect of improving strength owing to the adhesive impregnation portion Xb, a scratch test was performed on the adhesive impregnation portion Xb using TRIBOGEAR TYPE: HHS2000S (manufactured by Shinto Scientific Co., Ltd.). After the scratch test, the scratch hardness at which the electrode active material started to slide was measured by microscopic observation. The measurement was performed 3 times, and the average value was taken as the scratch hardness. The scratch hardness improvement rate was calculated according to the following equation, and evaluation was performed based on the following evaluation criteria.
Scratch hardness improvement rate = (scratch hardness of adhesive impregnation portion Xb/scratch hardness of a portion other than the adhesive portion X) × 100 In the case where a region of the adhesive impregnation portion Xb did not have a sufficient area for performing the scratch hardness evaluation, an evaluation member having a sufficient area of the adhesive impregnation portion Xb was prepared under the same conditions, and then was subjected to the evaluation.

### -Test conditions-

Scratching stylus: sapphire needle with a tip diameter of 0.1 mm and a tip angle of 60°
Scratching distance: 50 mm
Moving speed: 1.0 mm/sec
Load: from 0 g to 50 g

### -Evaluation criteria-

Good (G): the scratch hardness improvement rate being 10% or greater
Not good (NG): the scratch hardness improvement rate being less than 10%, or no adhesive impregnation portion Xb

[Test 2: Evaluation of peel strength] The positive electrode was peeled off from the battery member assembly in the state in which the peel angle was maintained at 90 degrees while the negative electrode was fixed. After the peeling, 3D observation of the surface state of the negative electrode using a digital microscope VHX-7000 (manufactured by KEYENCE CORPORATION). A surface area change ratio of the surface area of the adhesive protrusion portion Xa to the surface area of the region other than the adhesive portion, which was set to be the same area region when the adhesive protrusion portion Xa was captured in 2D, was calculated according to the following equation, and was evaluated based on the following evaluation criteria. Surface area change ratio = (surface area of adhesive protrusion portion Xa/surface area of the region other than the adhesive position set to have the same area region when the adhesive protrusion portion Xa was captured in 2D)×100

### -Evaluation criteria-

Very good (VG): the surface area change ratio being less than 10%
Good (G): the surface area change ratio being 10% or greater and less than 30%
Not good (NG): the surface area change ratio being 30% or greater

[Test 3: Evaluation of film rupture strength] In order to confirm an effect of improving strength owing to the adhesive impregnation portion Xb, a semicircular needle having a diameter of 1.0 mm and a tip shape radius of 0.5 mm was inserted to penetrate a sample at a test speed of 50 ± 5 mm/min according to JIS Z1701 puncture strength test, and the maximum force applied for piercing the sample with the needle was measured. The measurement was performed 5 times, and the average value was taken as film strength of the separator. The penetration was judged in the following manner. A conductive stage was disposed on an opposite side of the separator to the piercing side, and the moment when the resistance value between the conductive stage and the needle became 1 MΩ was determined as the judgement point for the penetration. A film rupture strength improvement rate was calculated according to the following equation, and was evaluated based on the following evaluation criteria.
Film rupture strength improvement rate = (film rupture strength at adhesive impregnation portion Xb/film rupture strength at the point other than the adhesive portion X)×100 In the case where the adhesive impregnation portion Xb did not have a sufficient area for performing the film rupture strength test, an evaluation member having a sufficient area of the adhesive impregnation portion Xb was prepared under the same conditions, and then was subjected to the evaluation.

### -Evaluation criteria-

Good (G): the film rupture improvement rate being 10% or greater
Not good (NG): the film rupture improvement rate being less than 10%, or no adhesive impregnation portion Xb

### (Example 1)

<Production of battery member> As illustrated in Fig. 13, the adhesive forming liquid composition was applied in the shape of dots onto the negative electrode 23 by inkjet printing. After the predetermined time had elapsed, the applied adhesive forming liquid composition was irradiated with UV light in a N₂ atmosphere to cure the adhesive forming liquid composition, thereby forming an adhesive 40.

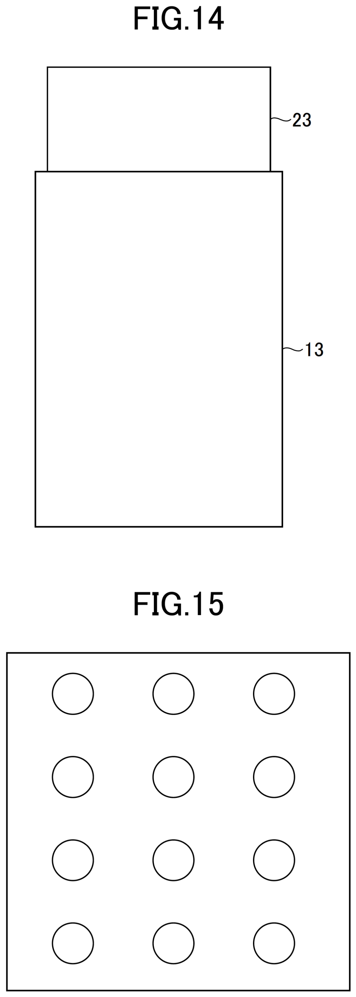

<Production of battery member assembly> As illustrated in Fig. 14, a positive electrode 13 was bonded to the battery member via the obtained adhesive 40 of the battery member, thereby producing a battery member assembly.

The battery member assembly of Example 1 was evaluated by Tests 1 and 2. The results are presented in Table 1.

(Examples 2 to 15) A battery member assembly was produced in the same manner as in Example 1, except that the conditions were changed as presented in Table 1. The battery member assemblies of Examples 2 to 15 were evaluated by the tests presented in Table 1. The results are presented in Table 1.

(Comparative Examples 1 and 2, and Comparative Examples 4 to 12) A battery member assembly was produced in the same manner as in Example 1, except that the conditions were changed as presented in Table 1. The battery member assemblies of Comparative Examples 1 and 2, and Comparative Examples 4 to 12 were evaluated by the tests presented in Table 1. In Table 1, Cu denotes a copper film having a film thickness of 20 µm. The results are presented in Table 1.

(Comparative Example 3) A battery member assembly was produced in the same manner as in Example 1, except that the conditions were changed as presented in Table 1, and <Production of battery member> and <Production of battery member assembly> were changed as follows. The same measurement and evaluation were performed on the produced battery member assembly. The results are presented in Table 1.

<Production of battery member> A polypropylene resin (used by heating at 200°C, manufactured by Sigma-Aldrich Co. LLC.), which was a hot-melt resin, was applied in the shape of dots on the negative electrode by dispensing. The polypropylene resin was cured as cooled, thereby forming an adhesive.

<Production of battery member assembly> A positive electrode was bonded to the battery member via the obtained adhesive of the battery member, thereby producing a battery member assembly.

**Table 1**

| | Adhesive forming liquid composition | Viscosity [cps] | Battery member | | Predetermined time [s] | Width W [µm] | Test 1 | Test 2 | Test 3 |
|---|---|---|---|---|---|---|---|---|---|
| | | | First | Second | | | Scratch hardness | Release hardness | Film rupture hardness |
| Ex. 1 | A | 8.9 | Negative electrode | Positive electrode | 2 | 136 | G | VG | - |
| Ex. 2 | A | 8.9 | Negative electrode | Positive electrode | 0.6 | 62 | G | G | - |
| Ex. 3 | A | 8.9 | Negative electrode | Film separator | 2 | 136 | G | VG | - |
| Ex. 4 | A | 8.9 | Negative electrode | Film separator | 0.6 | 62 | G | G | - |
| Ex. 5 | B | 180 | Negative electrode | Positive electrode | 20 | 89 | G | G | - |
| Ex. 6 | B | 180 | Negative electrode | Film separator | 20 | 89 | G | G | - |
| Ex. 7 | A | 8.9 | Paper separator | Negative electrode | 2 | 258 | - | VG | G |
| Ex. 8 | A | 8.9 | Paper separator | Negative electrode | 0.6 | 115 | - | VG | G |
| Ex. 9 | B | 180 | Paper separator | Negative electrode | 20 | 111 | - | VG | G |
| Ex. 10 | A | 8.9 | Film separator | Negative electrode | 2 | 39 | - | G | G |
| Ex. 11 | A | 8.9 | Film separator | Negative electrode | 0.6 | 16 | - | G | G |
| Ex. 12 | B | 180 | Film separator | Negative electrode | 20 | 18 | - | G | G |
| Ex. 13 | A | 8.9 | Integrated separator | Positive electrode | 2 | 71 | - | G | G |
| Ex. 14 | A | 8.9 | Integrated separator | Positive electrode | 0.6 | 36 | - | G | G |
| Ex.15 | B | 180 | Integrated separator | Positive electrode | 20 | 38 | - | G | G |
| Comp. Ex. 1 | A | 8.9 | Cu | Positive electrode | 2 | 0 | NG | NG | - |
| Comp. Ex. 2 | B | 180 | Negative electrode | Positive electrode | 2 | 0 | NG | NG | - |
| Comp. Ex. 3 | Hot-melt resin containing resin | - | Negative electrode | Positive electrode | - | 0 | NG | NG | - |
| Comp. Ex. 4 | A | 8.9 | Cu | Paper separator | 2 | 0 | - | NG | NG |
| Comp. Ex. 5 | B | 180 | Paper separator | Negative electrode | 2 | 0 | - | NG | NG |
| Comp. Ex. 6 | B | 180 | Cu | Paper separator | 2 | 0 | - | NG | NG |
| Comp. Ex. 7 | A | 8.9 | Cu | Film separator | 2 | 0 | - | NG | NG |
| Comp. Ex. 8 | B | 180 | Film separator | Negative electrode | 2 | 0 | - | NG | NG |
| Comp. Ex. 9 | B | 180 | Cu | Film separator | 2 | 0 | - | NG | NG |
| Comp. Ex.10 | A | 8.9 | Cu | Integrated separator | 2 | 0 | - | NG | NG |
| Comp. Ex.11 | B | 180 | Integrated separator | Positive electrode | 2 | 0 | - | NG | NG |
| Comp. Ex.12 | B | 180 | Cu | Integrated separator | 2 | 0 | - | NG | NG |

It was found from the results of Table 1 that the strength of the porous structure on the vicinity of the adhesive portion was improved by providing the adhesive impregnation portion Xb on the periphery of the adhesive protrusion portion Xa. This was considered to be due to the fact that the adhesive impregnation portion Xb improved the strength compared to the position other than the adhesive portion X. In addition, it was found that the same effect could be obtained with any of the negative electrode, the positive electrode, and the separator, regardless of the type of the battery member to which the adhesive was formed. As the adhesive impregnation portion Xb was larger, the higher effect was obtained. When the polymerizable compound having a low Tg was used in the adhesive, more favorable battery characteristics were obtained.

### (Referential Examples 1-1 to 24-3 and Comparative Referential Examples 1 to 6-3)

Materials of battery member assemblies used in Referential Examples and Comparative Referential Examples are as follows.
<Referential Example 1-1> The following materials were mixed to prepare an adhesive forming liquid composition.
Light acrylate I-AA (Tg: -45°C, manufactured by KYOEISHA CHEMICAL CO., LTD.): 97.1 parts by mass
Irgacure 184 (manufactured by BASF): 2.9 parts by mass The viscosity of the adhesive forming liquid composition was measured by TVE-25L (cone plate type) manufactured by ADVANTEC TOYO KAISHA, LTD. at 25°C and 50 rpm, and was found to be 20.0 mPa·s or less. The surface tension of the adhesive forming liquid composition was measured by an automatic tensiometer (DY-300, manufactured by Kyowa Interface Science Co., Ltd.) at 25°C, and was found to be 35 mN/m or less. As curing conditions when the adhesive forming liquid composition was polymerized in the below-described various evaluations, UV (light source: UV-LED (product name: FJ800, manufactured by Phoseon Technology), wavelength: 365 nm) was applied in an air atmosphere for 3 seconds at the radiation intensity of 300 mW/cm²,

[Rate of change in degree of polymerization] The rate of change in the degree of polymerization was measured using the prepared adhesive forming liquid composition in the following manner.

<Production of evaluation element> An inkjet discharging device equipped with an inkjet head (GEN5 head, manufactured by Ricoh Industry Company, Ltd.) was charged with the adhesive forming liquid composition. The adhesive forming liquid composition was continuously applied onto a substrate so that a thickness of an adhesive formed after UV irradiation would become 20 µm. At the time of application, the adhesive forming liquid composition was stably discharged from the inkjet head, nozzle blockage, discharge bending, or the like was not observed. As the substrate, a glass base on which ITO was formed by sputtering was used.

After applying the adhesive forming liquid composition, the applied adhesive forming liquid composition was polymerized under the above-described curing conditions.

<Method for evaluating rate of change in degree of polymerization> The degree of polymerization of the components included in the adhesive formed on the ITO-sputtered glass base was measured by IR spectroscopy. The degree of polymerization was calculated by reading the peak value at 820 cm⁻¹ to 800 cm⁻¹ corresponding to =CH out-of-plane bending vibrations, and compared with the numerical value before UV irradiation. Next, as an aging step, the evaluation element was vacuum-dried at 60°C for 12 hours, and a rate of change in the degree of polymerization before and after the drying was calculated, and the adhesive strength was evaluated based on the following evaluation criteria.

### -Evaluation criteria-

a: the rate of change in degree of polymerization being 1.5% or greater
b: the rate of change in degree of polymerization being 0.1% or greater and less than 1.5%
c: the rate of change in degree of polymerization being less than 0.1%

Next, [Evaluation of heating deformation], [Initial peel strength evaluation], [Evaluation of peel strength change before and after aging step], and [Evaluation of adhesive shape change on negative electrode active material layer] were performed using the adhesive forming liquid composition.

### [Evaluation of heating deformation]

<Production of evaluation element> The adhesive forming liquid composition in the amount of 50 µL was dripped onto a glass substrate using a dispenser. The applied adhesive forming liquid composition was irradiated with UV light for 3 seconds at 300 mW in an air to form an adhesive, thereby producing an evaluation element.

<Method for evaluating heating deformation> The evaluation element was set to be upright in the vertical direction with respect to the floor direction. The evaluation element was fixed in the above state and was heated for 12 hours in a thermostatic chamber of 60°C. Twelve hours later, whether deformation (dripping) of the adhesive by 2 mm or greater in the direction of the gravity was caused by heating was observed, and the heating deformation was evaluated based on the following evaluation criteria.

### -Evaluation criteria-

a: The heating deformation did not occur (dripping of less than 2 mm)
b: The heating deformation occurred (dripping of 2 mm or greater)

### [Initial peel strength evaluation]

<Production of evaluation element> An inkjet discharging device equipped with an inkjet head (GEN5 head, manufactured by Ricoh Industry Company, Ltd.) was charged with the adhesive forming liquid composition. The adhesive forming liquid composition was applied in the shape of dots on a 20 µm-thick copper foil substrate (first battery member) by controlling the discharge amount of the adhesive forming liquid composition (see Fig. 15). Each of the dots had a circular shape having a diameter of 1 mm, and gaps were provided between adjacent dots so that a center of one dot was set apart from a center of adjacent dot by 5 mm. In addition, the adhesive forming liquid composition was stably discharged from the inkjet head, nozzle blockage, discharge bending, or the like was not observed.

After applying the adhesive forming liquid composition, UV light was applied to the adhesive forming liquid composition under the curing conditions presented in Table 2 to perform polymerization. A 20 µm-thick copper foil substrate (second battery member) was arranged to face the copper foil substrate via the formed adhesive, thereby producing a battery member assembly. The curing conditions in Table 2 are as follows.
a: at 300 mW for 3 seconds in an air
b: at 300 mW for 3 seconds in a N₂ atmosphere (oxygen concentration: 0.0%)
c: at 300 mW for 10 seconds in a N₂ atmosphere (oxygen concentration: 0.0%)

The obtained battery member assembly was pressed by uniformly applying the pressure of 1.17 MPa over the surface of the battery member assembly by a press machine, thereby uniformly bonding the battery member assembly.
<Measuring method> The adhesive strength of the obtained battery member assembly was measured according to 90° peel test specified in JISZ0237. Specifically, the peel strength was measured by adhering an adhesive tape having a width of 18 mm to the second battery member, followed by peeling the adhesive tape off from the second battery member. The peel strength was evaluated based on the following evaluation criteria. The result of the evaluation criterion b or greater is determined as satisfying the effect of the present disclosure.

### -Measuring conditions of peel strength-

Peel strength measuring device: adhesive/coating film peel analyzer, Versatile Peel Analyzer (manufactured by Kyowa Interface Science Co., Ltd.)
Thin double-sided tape: No. 5000NS (width: 20 mm, manufactured by Nitto Denko Corporation)
Tape: No. 29 (width: 18 mm, manufactured by Nitto Denko Corporation)
Measuring speed: 30 mm/min
Peel angle: 90°
Peel distance: 50 mm

### -Evaluation criteria-

a: the initial peel strength being 0.6 N or greater
b: the initial peel strength being 0.1 N or greater and less than 0.6 N
c: the initial peel strength being less than 0.1 N

### [Evaluation of peel strength change before and after aging step]

<Production of evaluation element> An inkjet discharging device equipped with an inkjet head (GEN5 head, manufactured by Ricoh Industry Company, Ltd.) was charged with the adhesive forming liquid composition. The adhesive forming liquid composition was applied in the shape of dots on a 20 µm-thick copper foil substrate (first battery member) by controlling the discharge amount of the adhesive forming liquid composition (see Fig. 15). Each of the dots had a circular shape having a diameter of 1 mm, and gaps were provided between adjacent dots so that a center of one dot was set apart from a center of adjacent dot by 5 mm. In addition, the adhesive forming liquid composition was stably discharged from the inkjet head, nozzle blockage, discharge bending, or the like was not observed.

After applying the adhesive forming liquid composition, UV light was applied to the adhesive forming liquid composition under the curing conditions presented in Table 2 to perform polymerization. A 20 µm-thick copper foil substrate (second battery member) was arranged to face the copper foil substrate via the formed adhesive, thereby producing a battery member assembly.

The obtained battery member assembly was pressed by uniformly applying the pressure of 1.17 MPa over the surface of the battery member assembly by a press machine, thereby uniformly bonding the battery member assembly. Subsequently, as an aging step, the pressed evaluation element was vacuum-dried at 60°C for 12 hours.
<Measuring method> The adhesive strength of the obtained battery member assembly was measured according to 90° peel test specified in JISZ0237. Specifically, the rate of change in the peel strength before and after the aging step was measured by adhering an adhesive tape having a width of 18 mm to the second battery member, followed by peeling the adhesive tape off from the second battery member. The rate of change in the peel strength was evaluated based on the following evaluation criteria. The result of the evaluation criterion b or greater is determined as satisfying the effect of the present disclosure.

### -Measuring conditions of peel strength-

Peel strength measuring device: adhesive/coating film peel analyzer, Versatile Peel Analyzer (manufactured by Kyowa Interface Science Co., Ltd.)
Thin double-sided tape: No. 5000NS (width: 20 mm, manufactured by Nitto Denko Corporation)
Tape: No. 29 (width: 18 mm, manufactured by Nitto Denko Corporation)
Measuring speed: 30 mm/min
Peel angle: 90°
Peel distance: 50 mm

### -Evaluation criteria-

a: the rate of change in initial peel strength being 20% or greater
b: the rate of change in initial peel strength being 5% or greater and less than 20%
c: the rate of change in initial peel strength being less than 5%

### [Evaluation of adhesive shape change on negative electrode active material layer]

<Production of negative electrode in which negative electrode active material layer was formed> In water, 97.0 parts by mass of graphite particles (average particle diameter: 10 µm) serving as a negative electrode active material, 1.0 parts by mass of cellulose serving as a thickening agent, and 2.0 parts by mass of an acrylic resin serving as a binder were homogeneously dispersed, thereby obtaining a negative electrode active material dispersion liquid. The dispersion liquid was applied onto an 8 µm-thick copper foil serving as a current collector, and the obtained coating film was dried at 120°C for 10 minutes and pressed, thereby obtaining a negative electrode in which a negative electrode active material layer having a thickness of 60 µm.
<Production of evaluation element> An inkjet discharging device equipped with an inkjet head (GEN5 head, manufactured by Ricoh Industry Company, Ltd.) was charged with the adhesive forming liquid composition. The adhesive forming liquid composition was applied in the shape of dots on the negative electrode active material layer of the negative electrode (first battery member) by controlling the discharge amount of the adhesive forming liquid composition (see Fig. 15). Each of the dots had a circular shape having a diameter of 1 mm, and gaps were provided between adjacent dots so that a center of one dot was set apart from a center of adjacent dot by 5 mm. In addition, the adhesive forming liquid composition was stably discharged from the inkjet head, nozzle blockage, discharge bending, or the like was not observed.

After applying the adhesive forming liquid composition, UV light was applied to the adhesive forming liquid composition under the curing conditions presented in Table 2 to perform polymerization. After the UV light irradiation, the maximum height of each dot was confirmed to be 20 µm under an optical microscope, and the resultant member was provided as an evaluation element. Subsequently, as an aging step, the evaluation element was vacuum-dried at 60°C for 12 hours.
<Measuring method> The maximum height of the adhesive formed on the negative electrode active material layer was measured by an optical microscope (VHX, manufactured by KEYENCE CORPORATION). Among the applied dots of the adhesive, the maximum heights of 10 dots were measured, and the average maximum height was determined. The average maximum height was measured before and after the aging step, the rate of change in the average maximum height before and after the vacuum drying was evaluated based on the following evaluation criteria.

### -Evaluation criteria-

a: the change rate being less than 20%
b: the change rate being 20% or greater and less than 90%
c: the change rate being 90% or greater

In addition, the viscosity and surface tension of the adhesive forming liquid composition at 25°C were presented in Table 2 according to the following evaluation criteria. Note that the evaluation was not carried out on the liquid that included a solid component at room temperature, which was indicated by "-".

### (Evaluation criteria of viscosity)

a: the viscosity of the adhesive forming liquid composition being 20.0 mPa·s or less
b: the viscosity of the adhesive forming liquid composition being greater than 20.0 mPa·s

### (Evaluation of surface tension)

a: the surface tension of the adhesive forming liquid composition being 35 mN/m or greater
b: the surface tension of the adhesive forming liquid composition being less than 35 mN/m

<Referential Examples 1-2 to 24-3> In each of Referential Examples 1-2 to 24-3, an adhesive forming liquid composition was obtained in the same manner as the preparation of the adhesive forming liquid composition in Referential Example 1, except that the materials and composition were changed as presented in Tables 2 to 14. In addition, an evaluation element was produced in the same manner as in Referential Example 1-1, except that the conditions were changed as presented in Tables 2 to 14. The results are presented in Tables 2 to 14. The following materials were used.
Light Acrylate EC-A (Tg: -70°C, manufactured by KYOEISHA CHEMICAL CO., LTD.)
Light Acrylate PO-A (Tg: -22°C, manufactured by KYOEISHA CHEMICAL CO., LTD.)

<Comparative Referential Example 1> The following material was provided as an adhesive forming liquid composition.
BM-451B (manufactured by Zeon Corporation): 100.0 percent by mass The viscosity of the adhesive forming liquid composition was measured by a viscometer (TVE-25L (cone plate type) manufactured by ADVANTEC TOYO KAISHA, LTD.) at 25°C and 50 rpm, and was found to be 20.0 mPa·s or less. In addition, an evaluation element was produced in the same manner as in Referential Example 1-1, except that the conditions were changed as presented in Table 15. The evaluation element was produced by applying the adhesive forming liquid composition by spin coating, instead of inkjet printing, and heating the applied adhesive forming liquid composition to remove the volatile component. In [Rate of chang in degree of polymerization], the evaluation element was produced by applying the adhesive forming liquid composition by spin coating, and heating the applied adhesive forming liquid composition to remove the volatile component.
<Comparative Referential Example 2> The following material was provided as an adhesive forming liquid composition. PVDF (polyvinylidene fluoride, manufactured by KUREHA CORPORATION): 100.0 percent by mass An evaluation element was produced in the same manner as in Referential Example 1-1, except that the conditions were changed as presented in Table 15. The evaluation element was produced by applying the adhesive forming liquid composition by dispensing while heating at 250°C, instead of inkjet printing. In [Rate of chang in degree of polymerization], the evaluation element was produced by applying the adhesive forming liquid composition by dispensing, while heating at 250°C.
<Comparative Referential Example 3> The following material was provided as an adhesive forming liquid composition.
Polyethylene (manufactured by FUJIFILM Wako Pure Chemical Corporation): 100.0 percent by mass An evaluation element was produced in the same manner as in Referential Example 1-1, except that the conditions were changed as presented in Table 15. The evaluation element was produced by applying the adhesive forming liquid composition by dispensing while heating at 250°C, instead of inkjet printing. In [Rate of chang in degree of polymerization], the evaluation element was produced by applying the adhesive forming liquid composition by dispensing, while heating at 250°C.
<Comparative Referential Examples 4-1 to 6-3> An adhesive forming liquid composition of each of Comparative Referential Examples 4-1 to 6-3 was obtained in the same manner as the preparation of the adhesive forming liquid composition of Referential Example 1-1, except that the materials and composition were changed as presented in Tables 15 and 16.

The viscosity and surface tension of the adhesive forming liquid compositions of Comparative Referential Examples are presented in Tables 15 and 16 according to the evaluation criteria presented in Referential Example 1-1. In addition, the curing conditions when the adhesive forming liquid composition was polymerized in each evaluation are presented in Tables 15 and 16 in the same manner as in Referential Example 1-1.

**Table 2**

| | | | Referential Example | | | | | |
|---|---|---|---|---|---|---|---|---|
| | | | 1-1 | 1-2 | 1-3 | 2-1 | 2-2 | 2-3 |
| Adhesive forming liquid composition | Polymerizable compound (monofunctional) | IAA | 97.1 | 97.1 | 97.1 | - | - | - |
| | | ECA | - | - | - | 97.1 | 97.1 | 97.1 |
| | | POA | - | - | - | - | - | - |
| | Polymerizable compound (polyfunctional) | PEG400DA | - | - | - | - | - | - |
| | | PEG200DA | - | - | - | - | - | - |
| | | EB 160s | - | - | - | - | - | - |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | b | b | b | b | b | b |

**Table 3**

| | | | Referential Example | | | | | |
|---|---|---|---|---|---|---|---|---|
| | | | 3-1 | 3-2 | 3-3 | 4-1 | 4-2 | 4-3 |
| Adhesive forming liquid composition | Polymerizable compound (monofunctional) | IAA | - | - | - | - | - | - |
| | | ECA | - | - | - | - | - | - |
| | | POA | 99.0 | 99.0 | 99.0 | 97.1 | 97.1 | 97.1 |
| | Polymerizable compound (polyfunctional) | PEG400DA | - | - | - | - | - | - |
| | | PEG200DA | - | - | - | - | - | - |
| | | EB 160s | - | - | - | - | - | - |
| | Polymerization initiator | Irgacure 819 | 1.0 | 1.0 | 1.0 | 2.9 | 2.9 | 2.9 |
| | Curing conditions | | a | b | c | a | b | c |
| Conditions/ Evaluations | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 4**

| | | | Referential Example | | | | | |
|---|---|---|---|---|---|---|---|---|
| | | | 5-1 | 5-2 | 5-3 | 6-1 | 6-2 | 6-3 |
| Adhesive forming liquid composition | Polymerizable compound (monofunctional) | IAA | - | - | - | - | - | - |
| | | ECA | - | - | - | - | - | - |
| | | POA | 96.8 | 96.8 | 96.8 | 96.6 | 96.6 | 96.6 |
| | Polymerizable compound (polyfunctional) | PEG400DA | 0.3 | 0.3 | 0.3 | 0.5 | 0.5 | 0.5 |
| | | PEG200DA | - | - | - | - | - | - |
| | | EB 160s | - | - | - | - | - | - |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 5**

| | | | Referential Example | | | | | |
|---|---|---|---|---|---|---|---|---|
| | | | 7-1 | 7-2 | 7-3 | 8-1 | 8-2 | 8-3 |
| Adhesive forming liquid composition | Polymerizable compound (monofunctional) | IAA | - | - | - | - | - | - |
| | | ECA | - | - | - | - | - | - |
| | | POA | 96.1 | 96.1 | 96.1 | 95.6 | 95.6 | 95.6 |
| | Polymerizable compound (polyfunctional) | PEG400DA | 1.0 | 1.0 | 1.0 | 1.5 | 1.5 | 1.5 |
| | | PEG200DA | - | - | - | - | - | - |
| | | EB 160s | - | - | - | - | - | - |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 6**

| | | | Referential Example | | | | | |
|---|---|---|---|---|---|---|---|---|
| | | | 9-1 | 9-2 | 9-3 | 10-1 | 10-2 | 10-3 |
| Adhesive forming liquid composition | Polymerizable compound (monofunctional) | IAA | - | - | - | - | - | - |
| | | ECA | - | - | - | - | - | - |
| | | POA | 95.1 | 95.1 | 95.1 | 92.2 | 92.2 | 92.2 |
| | Polymerizable compound (polyfunctional) | PEG400DA | 1.9 | 1.9 | 1.9 | 4.9 | 4.9 | 4.9 |
| | | PEG200DA | - | - | - | - | - | - |
| | | EB 160s | - | - | - | - | - | - |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**[Table 7]**

| | | | Referential Example | | | | | |
|---|---|---|---|---|---|---|---|---|
| | | | 11-1 | 11-2 | 11-3 | 12-1 | 12-2 | 12-3 |
| Adhesive forming liquid composition | Polymerizable compound (monofunctional) | IAA | - | - | - | - | - | - |
| | | ECA | - | - | - | - | - | - |
| | | POA | 89.3 | 89.3 | 89.3 | 96.8 | 96.8 | 96.8 |
| | Polymerizable compound (polyfunctional) | PEG400DA | 7.8 | 7.8 | 7.8 | - | - | - |
| | | PEG200DA | - | - | - | 0.3 | 0.3 | 0.3 |
| | | EB 160s | - | - | - | - | - | - |
| | Polymerization initiator | Irgacure 819 | 2.9 | 2.9 | 2.9 | 1.0 | 1.0 | 1.0 |
| Conditions/ Evaluations | Curing conditions | | a | b | c | a | b | c |
| | [Rate of change in degree of polymerization] | | b | b | b | a | a | a |
| | Viscosity (mPa·s) | | a | a | a | a | a | a |
| | Surface tension (mN/m) | | a | a | a | a | a | a |

**Table 8**

| | | | Referential Example | | | | | |
|---|---|---|---|---|---|---|---|---|
| | | | 13-1 | 13-2 | 13-3 | 14-1 | 14-2 | 14-3 |
| Adhesive forming liquid composition | Polymerizable compound (monofunctional) | IAA | - | - | - | - | - | - |
| | | ECA | - | - | - | - | - | - |
| | | POA | 96.6 | 96.6 | 96.6 | 96.1 | 96.1 | 96.1 |
| | Polymerizable compound (polyfunctional) | PEG400DA | - | - | - | - | - | - |
| | | PEG200DA | 0.5 | 0.5 | 0.5 | 1.0 | 1.0 | 1.0 |
| | | EB 160s | - | - | - | - | - | - |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 9**

| | | | Referential Example | | | | | |
|---|---|---|---|---|---|---|---|---|
| | | | 14-4 | 14-5 | 14-6 | 15-1 | 15-2 | 15-3 |
| Adhesive forming liquid composition | Polymerizable compound (monofunctional) | IAA | - | - | - | - | - | - |
| | | ECA | - | - | - | - | - | - |
| | | POA | 95.6 | 95.6 | 95.6 | 95.1 | 95.1 | 95.1 |
| | Polymerizable compound (polyfunctional) | PEG400DA | - | - | - | - | - | - |
| | | PEG200DA | 1.5 | 1.5 | 1.5 | 1.9 | 1.9 | 1.9 |
| | | EB 160s | - | - | - | - | - | - |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 10**

| | | | Referential Example | | | | | |
|---|---|---|---|---|---|---|---|---|
| | | | 16-1 | 16-2 | 16-3 | 17-1 | 17-2 | 17-3 |
| Adhesive forming liquid composition | Polymerizable compound (monofunctional) | IAA | - | - | - | - | - | - |
| | | ECA | - | - | - | - | - | - |
| | | POA | 92.2 | 92.2 | 92.2 | 89.3 | 89.3 | 89.3 |
| | Polymerizable compound (polyfunctional) | PEG400DA | - | - | - | - | - | - |
| | | PEG200DA | 4.9 | 4.9 | 4.9 | 7.8 | 7.8 | 7.8 |
| | | EB 160s | - | - | - | - | - | - |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | b | b | b |
| | Viscosity (mPa·s) | | a | a | a | a | a | a |
| | Surface tension (mN/m) | | a | a | a | a | a | a |

**Table 11**

| | | | Referential Example | | | | | |
|---|---|---|---|---|---|---|---|---|
| | | | 18-1 | 18-2 | 18-3 | 19-1 | 19-2 | 19-3 |
| Adhesive forming liquid composition | Polymerizable compound (monofunctional) | IAA | - | - | - | - | - | - |
| | | ECA | - | - | - | - | - | - |
| | | POA | 96.8 | 96.8 | 96.8 | 96.6 | 96.6 | 96.6 |
| | Polymerizable compound (polyfunctional) | PEG400DA | - | - | - | - | - | - |
| | | PEG200DA | - | - | - | - | - | - |
| | | EB 160s | 0.3 | 0.3 | 0.3 | 0.5 | 0.5 | 0.5 |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 12**

| | | | Referential Example | | | | | |
|---|---|---|---|---|---|---|---|---|
| | | | 20-1 | 20-2 | 20-3 | 21-1 | 21-2 | 21-3 |
| Adhesive forming liquid composition | Polymerizable compound (monofunctional) | IAA | - | - | - | - | - | - |
| | | ECA | - | - | - | - | - | - |
| | | POA | 96.1 | 96.1 | 96.1 | 95.6 | 95.6 | 95.6 |
| | Polymerizable compound (polyfunctional) | PEG400DA | - | - | - | - | - | - |
| | | PEG200DA | - | - | - | - | - | - |
| | | EB 160s | 1.0 | 1.0 | 1.0 | 1.5 | 1.5 | 1.5 |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 13**

| | | | Referential Example | | | | | |
|---|---|---|---|---|---|---|---|---|
| | | | 22-1 | 22-2 | 22-3 | 23-1 | 23-2 | 23-3 |
| Adhesive forming liquid composition | Polymerizable compound (monofunctional) | IAA | - | - | - | - | - | - |
| | | ECA | - | - | - | - | - | - |
| | | POA | 95.1 | 95.1 | 95.1 | 92.2 | 92.2 | 92.2 |
| | Polymerizable compound (polyfunctional) | PEG400DA | - | - | - | - | - | - |
| | | PEG200DA | - | - | - | - | - | - |
| | | EB 160s | 1.9 | 1.9 | 1.9 | 4.9 | 4.9 | 4.9 |
| | Polymerization initiator | Irgacure 819 | 2.9 | 2.9 | 2.9 | 2.9 | 2.9 | 2.9 |
| Conditions/ Evaluations | Curing conditions | | a | b | c | a | b | c |
| | [Rate of change in degree of polymerization] | | a | a | a | a | a | a |
| | Viscosity (mPa·s) | | a | a | a | a | a | a |
| | Surface tension (mN/m) | | a | a | a | a | a | a |

**Table 14**

| | | | Referential Example | | |
|---|---|---|---|---|---|
| | | | 24-1 | 24-2 | 24-3 |
| Adhesive forming liquid composition | Polymerizable compound (monofunctional) | IAA | - | - | - |
| | | ECA | - | - | - |
| | | POA | 89.3 | 89.3 | 89.3 |
| | Polymerizable compound (polyfunctional) | PEG400DA | - | - | - |
| | | PEG200DA | - | - | - |
| | | EB 160s | 7.8 | 7.8 | 7.8 |
| | Polymerization initiator | Irgacure 819 | 2.9 | 2.9 | 2.9 |
| Conditions/ Evaluations | Curing conditions | | a | b | c |
| | [Rate of change in degree of polymerization] | | b | b | b |
| | Viscosity (mPa·s) | | a | a | a |
| | Surface tension (mN/m) | | a | a | a |

**Table 15**

| | | | Comparative Referential Example | | | | | |
|---|---|---|---|---|---|---|---|---|
| | | | 1 | 2 | 3 | 4-1 | 4-2 | 4-3 |
| | Latex | | 100.0 | - | - | - | - | - |
| | PVDF | | - | 100.0 | - | - | - | - |
| | PE | | - | - | 100.0 | - | - | - |
| | Polymerizable compound (monofunctional) | IAA | - | - | - | 87.4 | 87.4 | 87.4 |
| | | ECA | - | - | - | - | - | - |
| Adhesive forming liquid composition | | POA | - | - | - | - | - | - |
| | Polymerizable compound (polyfunctional) | PEG400DA | - | - | - | 9.7 | 9.7 | 9.7 |
| | | PEG200DA | - | - | - | - | - | - |
| | | EB 160s | - | - | - | - | - | - |
| | Polymerization initiator | Irgacure 819 | - | - | - | 2.9 | 2.9 | 2.9 |
| Conditions/ Evaluations | Curing conditions | | - | - | - | a | b | c |
| | [Rate of change in degree of polymerization] | | c | c | c | c | c | c |
| | Viscosity (mPa·s) | | b | b | b | a | a | a |
| | Surface tension (mN/m) | | - | - | - | a | a | a |

**Table 16**

| | | | Comparative Referential Example | | | | | |
|---|---|---|---|---|---|---|---|---|
| | | | 5-1 | 5-2 | 5-3 | 6-1 | 6-2 | 6-3 |
| | Latex | | - | - | - | - | - | - |
| | PVDF | | - | - | - | - | - | - |
| | PE | | - | - | - | - | - | - |
| | Polymerizable compound (monofunctional) | IAA | 87.4 | 87.4 | 87.4 | 87.4 | 87.4 | 87.4 |
| | | ECA | - | - | - | - | - | - |
| Adhesive forming liquid composition | | POA | - | - | - | - | - | - |
| | Polymerizable compound (polyfunctional) | PEG400DA | - | - | - | - | - | - |
| | | PEG200DA | 9.7 | 9.7 | 9.7 | - | - | - |
| | | EB 160s | - | - | - | 9.7 | 9.7 | 9.7 |
| | Polymerization initiator | Irgacure 819 | 2.9 | 2.9 | 2.9 | 2.9 | 2.9 | 2.9 |
| | Curing conditions | | a | b | c | a | b | c |
| Conditions/ Evaluations | [Rate of change in degree of polymerization] | | c | c | c | c | c | c |
| | Viscosity (mPa·s) | | a | a | a | a | a | a |
| | Surface tension (mN/m) | | a | a | a | a | a | a |

It was found from the results of Table 2 to 16 that excellent initial peel strength was exhibited and a high effect of improving adhesive strength before and after the aging step could be obtained by carrying out the aging step (vacuum-drying step) so that the rate of change in the degree of polymerization of the adhesive before and after the aging step became 0.1% or greater.

In addition, the results demonstrated that the resin density of the adhesive obtained after polymerization was increased and the strength of the adhesive was increased by selecting an appropriate monofunctional polymerizable compound and an appropriate polyfunctional polymerizable compound for the adhesive forming liquid composition and the amounts of the monofunctional and polyfunctional polymerizable compounds were adjusted. As a result, a sufficient adhesive function of bonding the battery members to each other was likely to obtain.

It was found that, in the case where only a monofunctional polymerizable compound was included in the adhesive forming liquid composition, or the case where an amount of a bifunctional or higher polyfunctional polymerizable compound was small, shape deformation by heating was confirmed so that both excellent initial adhesion and excellent flexibility were achieved. In addition, the results suggested that, since the molecular weight of the adhesive after the polymerization became relatively low, the polymerization was likely to progress in the vacuum-drying step, and an effect of improving the adhesive force before and after the vacuum-drying step became high.

It was confirmed that, when the amount of the bifunctional or higher polyfunctional polymerizable compound in the adhesive forming liquid composition was large, the initial adhesion was likely to reduced. It was found that, when the amount of the bifunctional or higher polyfunctional polymerizable compound was excessively large, as in Comparative Referential Examples 4-1 to 6-3, the initial adhesion became insufficient, and the adhesive force improvement effect before and after the vacuum-drying step was low. This is assumed that the adhesion function or flexibility of the resin was reduced because the crosslink density of the adhesive obtained after the polymerization was excessively high.

It was found from Comparative Referential Examples 1 to 3 that the hot-melt resin or polymer latex had a small change in the degree of polymerization before and after the aging step, and also had a small change in adhesion. The results of Comparative Referential Examples 1 to 3 suggest that even through excellent adhesion is exhibited before vacuum drying, the degree of polymerization of the adhesive does not change after the vacuum drying, and therefore positional deviation or melting of the adhesive is likely to occur, leading to reduction in battery characteristics or misalignment of stacked layers.

For example, the embodiments of the present disclosure are as follows.
<1> A battery member, including: a porous structure at an outermost surface of the battery member; and an adhesive layer that includes one or more adhesive portions formed of an adhesive, each of one or more adhesive portions including an adhesive protrusion portion Xa that is disposed on the porous structure, and an adhesive impregnation portion Xb that is disposed within the porous structure and extends onto a periphery of the adhesive protrusion portion Xa.
<2> The battery member according to <1>, wherein a width W of the adhesive impregnation portion Xb as viewed in a vertical direction with respect to a plane of the battery member on which the adhesive protrusion portion Xa is disposed is 0.01 mm or greater.
<3> A battery member assembly, including: a first battery member that is the battery member of <1> or <2>; and a second battery member that is bonded to the first battery member via the adhesive protrusion portion Xa.
<4> The battery member assembly according to <3>, wherein a width W of the adhesive impregnation portion Xb as viewed in a vertical direction with respect to a plane of the first battery member on which the adhesive protrusion portion Xa is disposed is 0.01 mm or greater.
<5> The battery member assembly according to <3> or <4>, wherein the one or more adhesive portions include two or more adhesive portions, each including the adhesive protrusion portion Xa and the adhesive impregnation portion Xb, and the two or more adhesive portions are disposed discontinuously with respect to the porous structure.
<6> The battery member assembly according to any one of <3> to <5>, wherein a resin included in the adhesive protrusion portion Xa and the adhesive impregnation portion Xb has a pore diameter of 10 nm or less.
<7> A method for producing a battery member assembly of <3>, the method including:
   applying an adhesive forming liquid composition to a first battery member including a porous structure; after a predetermined time has elapsed, applying energy to the adhesive forming liquid composition to polymerize the adhesive forming liquid composition to form an adhesive layer, where the adhesive layer includes one or more adhesive portions formed of an adhesive, each of the one or more adhesive portions including an adhesive protrusion portion Xa that is disposed on the porous structure, and an adhesive impregnation portion Xb that is disposed within the porous structure and extends onto a periphery of the adhesive protrusion portion Xa;
   bonding the first battery member and a second battery member via the adhesive protrusion portion Xa to form the battery member assembly.
<8> The method according to <7>, wherein the energy is light.
<9> The method according to <7> or <8>, further including: processing the battery member assembly obtained by the bonding.
<10> The method according to <9>, wherein the processing includes stacking the battery member assembly or winding the battery member assembly.
<11> The method according to any one of <7> to <10>, wherein the adhesive forming liquid composition includes one or more polymerizable compounds as a main component.
<12> The method according to <11>, wherein the one or more polymerizable compounds cause an anaerobic polymerization reaction.
<13> The method according to <11> or <12>, wherein each of the one or more polymerizable compounds includes an acrylic group or a methacrylic group.
<14> The method according to any one of <11> to <13>, wherein the one or more polymerizable compounds include a monofunctional polymerizable compound having a glass transition temperature of 50°C or less and a polyfunctional polymerizable compound.
<15> The method according to any one of <11> to <14>, further including:
   performing heating or deaeration so that a rate of change in a degree of polymerization of the adhesive before and after the bonding is to be 0.1% or greater.
<16> An apparatus for producing a battery member assembly, the apparatus including:
   an adhesive forming liquid composition applicator configured to apply an adhesive forming liquid composition to a first battery member that is the battery member of <1> or <2>; an adhesive forming liquid composition impregnation device configured to allow the first member to be impregnated with the adhesive forming liquid composition; an adhesive forming device configured to apply energy to the adhesive forming liquid composition to form an adhesive; and a bonding device configured to bond the first battery member and a second battery member via the adhesive.
<17> The apparatus according to <16>, further including: an aging device configured to perform heating or deaeration, or both heating and deaeration on the adhesive to age the adhesive.
<18> A battery stack including: the battery member assembly of any one of <3> to <6>.
<19> A power storage device including: the battery stack of <18>.

The battery member according to <1> or <2>, the battery member assembly according to any one of <3> to <6>, the method for producing the battery member assembly according to any one of <7> to <15>, the apparatus for producing the battery member assembly of <16> or <17>, the battery stack according to <18>, and the power storage device according to <19> can solve the various problems existing in the related art, and can achieve the object of the present disclosure.

In addition, other embodiments of the present disclosure are, for example, as follows. <<1>> A method for producing a battery member assembly, the method including: polymerizing an adhesive forming liquid composition to form an adhesive, and forming an adhesive layer including the adhesive on a first battery member;
bonding the first battery member to a second battery member via the adhesive; and performing heating or deaeration, or both heating and deaeration so that a rate of a change in degree of polymerization of the adhesive becomes 0.1% or greater. <<2>> The method according to <<1>>, wherein the degree of polymerization of the adhesive at the polymerizing is 50% or greater. <<3>> The method according to <<1>> or<<2>>, wherein the polymerizing includes applying external energy to the adhesive forming liquid composition to form the adhesive. <<4>> The method according to <<3>> wherein the external energy is light. <<5>> The method according to <<4>> wherein the light is ultraviolet light. <<6>> The method according to any one of <<1>> to <<5>>, wherein the adhesive forming liquid composition includes a polymerizable compound as a main component. <<7>> The method according to <<6>>, wherein the polymerizable compound is a radically polymerizable compound. <<8>> The method according to <<6>> or <<7>>,
wherein the polymerizable compound includes an acrylic group or a methacrylic group. <<9>> The method according to any one of <<6>> to <<8>>, wherein the polymerizable compound has a glass transition temperature of 50°C or lower.
<<10>> The method according to any one of <<1>> to <<9>>, wherein the polymerizing and the forming include applying the adhesive forming liquid composition or the adhesive onto the first battery member, and the applying includes applying the adhesive forming liquid composition or the adhesive onto the first battery member by inkjet printing. <<11>> An apparatus for producing a battery member for implementing the method of any one of <<1>> to <<10>>, the apparatus including:
   an adhesive layer forming device configured to form an adhesive layer, which includes an adhesive obtained by polymerizing an adhesive forming liquid composition, on a first battery member; a bonding device configured to bond the first battery member to a second battery member via the adhesive; and an aging device configured to perform heating or deaeration, or both heating and deaeration on the adhesive. <<12>> The apparatus according to <<11>>, wherein the adhesive layer forming device is configured to apply external energy to the adhesive forming liquid composition to form the adhesive, and the external energy is light.
<<13>> The apparatus according to <<11>> or <<12>>, wherein the adhesive layer forming device is an inkjet device. <<14>> A method for producing a battery stack, the method including: producing a plurality of battery member assemblies according to the method of any one of <<1>> to <<10>>; and stacking the plurality of battery member assemblies. <<15>> An apparatus for producing a battery stack, the apparatus including: an apparatus for producing a battery member assembly for implementing the method of any one of <<1>> to <<10>>; and a battery member assembly stacking device configured to stack battery member assemblies,
   wherein the apparatus for producing the battery member assembly includes:
   an adhesive layer forming device configured to form an adhesive layer, which includes an adhesive obtained by polymerizing an adhesive forming liquid composition, on a first battery member; a bonding device configured to bond the first battery member to a second battery member via the adhesive; and an aging device configured to perform heating or deaeration, or both heating and deaeration on the adhesive. <<16>> A liquid composition, including: one or more polymerizable compounds as a main component, wherein a deformation value in a heating deformation evaluation using a heating deformation test element prepared with the liquid composition is 10 mm or less, and an initial peel strength of a peel strength evaluation element prepared with the liquid composition is 0.1 N or greater.
<<17>> The liquid composition according to <<16>>, wherein the one or more polymerizable compounds include a monofunctional polymerizable compound having a glass transition temperature of 50°C or lower and a polyfunctional polymerizable compound. <<18>> The liquid composition according to <<17>>,
   wherein an amount of the monofunctional polymerizable compound is 90% or greater relative to a total amount of the one or more polymerizable compounds.
<<19>> The liquid composition according to <<17>>, wherein an amount of the polyfunctional polymerizable compound is 10% or less relative to a total amount of the one or more polymerizable compounds.
<<20>> A battery member, including: an adhesive disposed on the battery member, wherein an initial peel strength of the adhesive in a peel strength evaluation element is 0.1 N or greater, and a deformation value of the adhesive in a deformation test is less than 20%. <<21>> The battery member according to <<20>>,
   wherein the adhesive is formed using an adhesive forming liquid composition that includes one or more polymerizable compounds, the one or more polymerizable compounds including a monofunctional polymerizable compound having a glass transition temperature of 50°C or lower and a polyfunctional polymerizable compound.
<<22>> The battery member according to <<20>>, further including
   another battery member bonded to the battery member.

The method for producing the battery member assembly according to any one of <<1>> to <<10>>, the apparatus for producing the battery member assembly according to any one of <<11>> to <<13>>, the method for producing the battery stack according to <<14>>, the apparatus for producing the battery stack according to <<15>>, the liquid composition according to any one of <<16>> to <<19>>, and the battery member according to any one of <<20>> to <<22>> can solve the various problems existing in the related art, and can achieve the object of the present disclosure.

## Claims

1. A battery member, comprising:
a porous structure (Y) at an outermost surface of the battery member; and
an adhesive layer that includes one or more adhesive portions (X) formed of an adhesive, each of the one or more adhesive portions (X) including:
an adhesive protrusion portion (Xa) that is disposed on the porous structure (Y), and an adhesive impregnation portion (Xb) that is disposed within the porous structure (Y) and extends onto a periphery of the adhesive protrusion portion (Xa).

2. The battery member according to claim 1, wherein a width (W) of the adhesive impregnation portion (Xb) as viewed in a vertical direction with respect to a plane of the battery member on which the adhesive protrusion portion (Xa) is disposed is 0.01 mm or greater.

3. A battery member assembly, comprising, a first battery member that is the battery member of claim 1 or 2; and a second battery member that is bonded to the first battery member via the adhesive protrusion portion (Xa).

4. The battery member assembly according to claim 3, wherein a width W of the adhesive impregnation portion (Xb) as viewed in a vertical direction with respect to a plane of the first battery member on which the adhesive protrusion portion (Xa) is disposed is 0.01 mm or greater.

5. The battery member assembly according to claim 3 or 4, wherein the one or more adhesive portions (X) include two or more adhesive portions (X), each including the adhesive protrusion portion (Xa) and the adhesive impregnation portion (Xb), and the two or more adhesive portions (X) are disposed discontinuously with respect to the porous structure (Y).

6. The battery member assembly according to any one of claims 3 to 5, wherein a resin included in the adhesive protrusion portion (Xa) and the adhesive impregnation portion (Xb) has a pore diameter of 10 nm or less.

7. A method for producing the battery member assembly of any one of claims 3 to 6, the method comprising:
applying an adhesive forming liquid composition to a first battery member including a porous structure (Y);
after a predetermined time has elapsed, applying energy to the adhesive forming liquid composition to polymerize the adhesive forming liquid composition to form an adhesive layer, where the adhesive layer includes one or more adhesive portions (X) formed of an adhesive, each of the one or more adhesive portion including an adhesive protrusion portion (Xa) that is disposed on the porous structure (Y), and an adhesive impregnation portion (Xb) that is disposed within the porous structure (Y) and extends onto a periphery of the adhesive protrusion portion (Xa); and
bonding the first battery member and a second battery member via the adhesive protrusion portion (Xa) to form the battery member assembly.

8. The method according to claim 7, wherein the energy is light.

9. The method according to claim 7 or 8, further comprising, processing the battery member assembly obtained by the bonding.

10. The method according to claim 9, wherein the processing includes stacking the battery member assembly or winding the battery member assembly.

11. The method according to any one of claims 7 to 10, wherein the adhesive forming liquid composition includes one or more polymerizable compounds as a main component.

12. The method according to claim 11, wherein the one or more polymerizable compounds cause an anaerobic polymerization reaction.

13. The method according to claim 11 or 12, wherein each of the one or more polymerizable compounds includes an acrylic group or a methacrylic group.

14. The method according to any one of claims 11 to 13, wherein the one or more polymerizable compounds include a monofunctional polymerizable compound having a glass transition temperature of 50°C or less and a polyfunctional polymerizable compound.

15. The method according to any one of claims 11 to 14, further comprising, performing heating or deaeration so that a rate of change in a degree of polymerization of the adhesive before and after the bonding is to be 0.1% or greater.
